# EUROPEAN PATENT SPECIFICATION

(11) **EP 2 630 457 B1**
(45) Date of publication and mention of the grant of the patent: **04.03.2020**
(21) Application number: 11833908.4
(22) Date of filing: 12.01.2011
(51) Int. Cl.: G01K 7/32, G06K 7/00, G01K 1/02, G06K 19/07, G06K 19/077, G06K 7/10, G06F 12/14, G06F 21/35, G06F 21/83, G06F 21/84, H04W 4/80

(54) **METHOD AND SYSTEM FOR MONITORING TEMPERATURE USING A REMOTE-ACCESS DEVICE**
METHODE UND SYSTEM ZUM ÜBERWACHEN EINER TEMPERATUR MITHILFE EINES FERNABFRAGEGERÄTS
MÉTHODE ET SYSTÈME POUR CONTRÔLER UNE TEMPÉRATURE À L'AIDE D'UN DISPOSITIF À L'INTERROGATION À DISTANCE

(30) Priority: 22.10.2010 WO PCT/FI2010/050836
(43) Date of publication of application: 28.08.2013
(73) Proprietor: Smartrac Investment B.V., 1077 XX Amsterdam (NL)
(72) Inventor: NIKKANEN, Mikko, FI-33710 Tampere (FI); MANNINEN, Antti, FI-33100 Tampere (FI); KOSKELAINEN, Tuomas, FI-33960 Pirkkala (FI); VIRTANEN, Juhani, FI-33100 Tampere (FI); AALTO, Harri, FI-33960 Pirkkala (FI); VATTULAINEN, Juha, FI-36200 Kangasala (FI); STROMBERG, Samuli, FI-33400 Tampere (FI)
(74) Representative: Berggren Oy, Tampere
(86) International application number: PCT/FI2011/050017
(87) International publication number: WO 2012/052604

(56) References cited:
- EP-A2- 1 347 409
- EP-A2- 1 347 409
- WO-A1-01/91080
- WO-A1-03/091945
- WO-A1-03/098175
- WO-A1-03/098175
- WO-A1-2004/042668
- WO-A1-2009/138893
- GB-A- 2 308 947
- GB-A- 2 308 947
- US-A1- 2004 036 626
- US-A1- 2006 181 414
- US-A1- 2006 261 946
- US-A1- 2007 001 862
- US-A1- 2007 285 229
- US-A1- 2008 136 646
- US-A1- 2009 278 685
- US-A1- 2010 134 257
- US-B1- 7 080 593

## Description

### Field

The present invention relates to remote-access apparatuses, especially to methods, devices, systems and computer programs for monitoring temperature of temperature-sensitive items with a remote-access apparatus and the remote-access apparatuses suitable for such operations.

### Background

Modern logistics was to a great degree enabled by the development of the product code system and bar codes. Products and pallets could be quickly identified by reading a bar code with an optical reader, and the tracking of items in the logistic chain became feasible. Furthermore, the products could be counted and sold at the point of sale more quickly and more reliably. Beyond consumer product logistics, industrial material management systems, postal and courier services, healthcare and bio-analytics systems and many other fields of human activity have benefitted from the use of bar codes.

Over time, the needs of having various kinds of information available on a product outgrew the capabilities of a simple bar code. To this end, new technologies were developed, such as two-dimensional bar codes. Of such technologies, radio frequency identification (RFID) has rather quickly become the technology of choice for identifying and tracking items. RFID technology has a vast number of applications making use of the ability to read an RFID tag from a distance even without a line-of-sight connection between the reader and the tag. RFID is quickly replacing or at least augmenting the bar code technology in many places.

The basic information that an RFID tag carried has traditionally been electronic product code (EPC) information and/or tag identification information. RFID tags with more capabilities may have the ability to store more information in the tag memory, and even carry out some simpler processing of data.

A radio frequency identification tag (RFID tag) typically comprises an RFID chip and an antenna connected to the chip, attached to or protected inside a plastic layer. The RFID chip contains analog and/or digital processing circuitry, e.g. a state machine and/or a processor and memory for storing information, as well as circuitry for receiving radio frequency (RF) energy and modulating the RF wave. The chip is connected to the antenna, whose shape and size depend on the frequency at which the tag operates and the application for which the tag is used. The chip and the antenna are often laid inside a thin plastic laminate or container for protection. The tag as a whole is typically flexible to a certain degree, especially the passive tags that do not contain a power supply.

Passive tags use the energy from the radio-frequency electromagnetic field of the read-out signal to power the operations that the tag carries out. Passive tags operate essentially while they are in the reader field, and are essentially inactive at other times. Therefore, the farther the reader device and the weaker the read-out signal, the less energy is available for the tag to use. This in turn means that the tag cannot perform very complex operations that would require a lot of power, since such tags could only be read from a very short distance away. In other words, the read-out distance of a tag is to a large extent determined by the power consumption requirements of the tag. Naturally, the attenuation and power distribution of the electromagnetic signal emitted by the tag is another concern. To tackle this issue, some passive tags have a battery that may be used to power the processing circuitry and thereby allow longer operating range for the tag. Such tags that use an internal power source to energize the response signal may be called semi-passive tags.

Some applications may necessitate more complex processing and/or more demanding properties of the RFID tag. It may become necessary to arrange more internal power such that these operations may be carried out. Some tags may require an internal power source to communicate with a longer range. Such tags may be called active tags. It may also be necessary to provide internal power so that operations can be carried out at times when the power from the external radio frequency electromagnetic field is not available. Usually this is arranged by means of a battery attached to the RFID tag. The battery may power sensors, memory, processors and/or a transmitter of the tag so that sensing, data logging and processing may be carried out at any time. Such more complex tags may be more complicated to manufacture, more expensive and/or more prone to malfunction than passive or semi-passive tags. Moreover, any tags with an internal power supply may have a limited lifetime, since they cannot be operated properly or at all when the battery runs out. Another practical problem is that when an active tag is taken into use, the battery operation needs to be activated. Otherwise, the battery would be in use e.g. already starting from manufacturing of the tag and prior to actual active use.

A problem with complex remote-access devices is that their manufacture may be expensive, and to operate properly, they may require maintenance such as replacing a battery, and these properties may limit their usefulness in temperature monitoring applications.

There is, therefore, a need for solutions that facilitate the use of simpler tags for more complicated operations, especially for temperature monitoring.

WO 03098175 discloses a system for tracking temperature differentials associated with a package during transportation and storage thereof, comprising a passive RFID (Radio Frequency Identification) tag adapted for containment within the package and an RFID reader adapted to communicate with such passive RFID tag, such tag including means for sensing temperature, means for storing temperature data and means for transmitting such data upon activation by such reader, such reader including means for activating such tag, means for receiving and storing temperature data received from such tag, and means for making such received temperature data available to an interested party.

US 20070285229 discloses a Radio Frequency Identification (RFID) tag, comprising: a controller for setting an alarm state upon occurrence of an alarm condition; a visual display device under control of the controller, the visual display device providing a visual indicator of the alarm condition when the alarm state is set, wherein the visual indicator of the alarm condition can only be reset by an authorized entity.

US 20080136646 discloses a transponder for a HF communication system, the transponder comprising: an antenna for receiving high-frequency carrier signals, the antenna having reflective characteristics; a control unit for providing transponder-specific parameters; and a modulator being controlled by the control unit, the modulator altering the reflective characteristics of the antenna in accordance with at least one transponder-specific parameter.

EP 1347409 discloses an electronic tag comprising electronic circuitry incorporating a microprocessor, a non-volatile memory associated with the microprocessor such that the microprocessor can write data to the non-volatile memory, a sensing transducer connected to the microprocessor, and an interface for interrogation of the non-volatile memory, the sensing transducer being such as to output an electrical signal in response to an event of a pre-selected type, and the microprocessor being programmed to log signals from the sensing transducer to the non-volatile memory to produce a record of the selected event and being arranged to be powered by the electrical output signal from the sensing transducer.

GB 2308947 discloses a radio frequency identification tag comprising a power supply, means responsive to a radio signal for energising the power supply, a memory circuit storing a tag identification code, and means energised by the power supply for transmitting from the tag a radio signal representing the tag identification code, wherein the tag further comprises a sensor responsive to an environmental parameter to which the tag is exposed, and means energised by the power supply for generating a sensor code representing the parameter to which the sensor is responsive, the radio signal transmitted from the tag representing the tag identification code and the sensor code.

### Summary

Now there has been invented an improved method and technical equipment implementing the method, by which the above problems are alleviated and that enable the use of simpler remote-access devices for more complex operations than before. The invention relates to a method as specified in claim 1, and a system as specified in claims 12.

Various embodiments are disclosed in the dependent claims.

The scope of protection sought for various embodiments of the invention is set out by the independent claims. The features described in this specification that do not fall under the scope of the independent claims are to be interpreted as examples useful for understanding various embodiments of the invention.

The invention relates to a method and a system for monitoring a temperature-managed chain. A remote-access apparatus is energetically passive, and draws its operating power from the electromagnetic field transmitted by the reader device. The local temperature-sensitive properties of the remote-access device such as an FRID tag are used to measure temperature data with the help of a reader device. Temperature data may also be stored back to the remote-access device. As a temperature-sensitive item such as a food package moves through the production-transport-sale-consumption chain, the same remote-access apparatus can remain attached to the package, since no power source or maintenance is needed. Furthermore, the party responsible for the maintenance of the item's temperature may be identified in association with the temperature measurement. A tamper-proof system may be achieved by calibrating the temperature data only later. For example, the temperature data may be such that it cannot be interpreted by the reader without calibration data. The calibration data may be available to the consumer or to the authorities, whereby they may be able to check whether the item has been in unsuitable temperatures in the chain.

According to a first aspect, there is provided a method for monitoring temperature with a remote-access device, said remote-access device being energetically essentially passive, the method comprising associating said remote-access device physically with an item, such that a temperature of said item is in relation to a temperature of the remote-access device, forming first temperature data of said remote-access device using a reader device in a first environment, moving said remote-access device from the first environment to a second environment, forming second temperature data of said remote-access device using a reader device in said second environment. The temperature of the remote-access device may be in relation to the temperature of the item due to heat conductivity of materials, corresponding to the time spent in an environment, based on temperature differences between physical locations, and/or based on the heat capacity and insulation of the item and/or the remote-access device.

According to an embodiment, the method comprises storing said first temperature data or temperature information derived from said first temperature data and said second temperature data or temperature information derived from said second temperature data into a memory association with each other by using an identifier such as the tag identifier for said association. According to an embodiment, the method comprises energizing said remote-access device using at least one reader device in determining first and second temperature data using an electromagnetic field, and communicating said first and second temperature data from the remote-access device to said at least one reader device using back-scattering modulation of said electromagnetic field. According to an embodiment, the method comprises determining said first temperature data of said remote-access device using a first reader device, determining said second temperature data of said remote-access device using a second reader device, associating an identifier of said first reader device with said first temperature data, associating an identifier of said second reader device with said second temperature data, and storing said first temperature data, said identifier of said first reader device, said second temperature data, and said identifier of said second reader device in association with each other into a memory. According to an embodiment, the method comprises storing said first and second temperature data into a memory using a reader device, wherein said memory is memory on the remote-access device. According to an embodiment, said memory on the remote-access device is memory protected by an access key such as protected user memory or password memory and the method comprises accessing said memory using an access key. According to an embodiment, the method comprises obtaining an advanced functionality code from said remote-access device, using said advanced functionality code, detecting that said remote-access device can be used for temperature monitoring. According to an embodiment, the remote-access device comprises calibration data for calibrating said temperature data, and the method comprises accessing said calibration data. According to an embodiment, temperature data comprises at least one of the group of data indicative of temperature history, series of time and temperature data points, series of location and temperature data points, series of time, location and temperature data points or a value indicative of temperature data integrated over time. According to an embodiment, the method comprises comparing said temperature data to a threshold or a range, and based on said comparing, determining whether a threshold or a range has been exceeded, and indicating or storing information on exceeding a threshold or a range. According to an embodiment, the method comprises determining maturity, usability or quality of said item by using said temperature data, calculating a maturity, usability or quality time such as a best-before date based on said determining, and storing said maturity, usability or quality time on said remote-access device. According to the invention, the method comprises calibrating said first temperature data using calibration data using a computer different from said reader at a time later than the time of determining first temperature data, such as 1 hour, 1 day, 10 days, a month or a year later, wherein said calibration data is stored on said remote-access device. As an example not presented as an embodiment of the present invention, said calibration data may alternatively be stored on a network memory.

According to an embodiment, the method comprises calibrating said remote-access device using a reader device before determining first and second temperature data, after determining first temperature data and before determining second temperature data, or after determining first and second temperature data. According to an embodiment, the method comprises copying temperature data for another remote-access device to be used as part of temperature data for the current remote-access device, wherein said copying is done in response to changing a container for said item. According to an embodiment, the method comprises storing information related to a change of responsibility of monitoring the item's temperature in association with said first and second temperature data, wherein said information related to a change of responsibility comprises in encrypted or unencrypted form at least one of a group of time, location, identifier of a responsible party, digest of temperature data and/or time, anda signature by a responsible party. According to an embodiment, the method comprises positioning the item on a shelf, in a transport vehicle or in a storage room based on said temperature data. According to an embodiment, said item comprises food, and the method further comprises controlling a transport time, a storage temperature, or temperature or time of preparing said food based on said temperature data.

According to a second aspect, there is provided a remote-access device, said remote-access device being energetically essentially passive, comprising an antenna, circuitry for processing information and memory, the memory containing first temperature data formed with a reader device at a first location and second temperature data formed with a reader device at a second location.

According to an embodiment, the first or the second temperature data comprises at least one of the group of data indicative of temperature history, series of time and temperature measurement points, series of location and temperature measurement points, series of time, location and temperature measurement points or a temperature-time integral. According to an embodiment, the remote-access device comprises calibration data for forming temperature values from said first and second temperature data. According to an embodiment, the remote-access device comprises an identifier of the first reader device associated with said first temperature data and an identifier of the second reader device associated with said second temperature data.

According to a third aspect, there is provided a reader device for reading remote-access devices, said remote-access devices being energetically essentially passive, said reader device comprising a processor and a memory comprising computer program code, said computer program code containing instructions that, when run on the processor, cause the reader device to communicate with a remote-access device, the remote-access device being physically associated with an item, such that a temperature of said item is in relation to a temperature of the remote-access device, in said communication, determine a temperature history of said remote-access device in a first environment by accessing the memory of the remote-access device, determine second temperature data of said remote-access device in a second environment, and store said second temperature data in association with the temperature history.

According to an embodiment, the reader device comprises computer program code, said computer program code containing instructions that, when run on the processor, cause the reader device to store said second temperature data in association with the temperature history into a memory on the remote-access device. According to an embodiment, said reader device comprises an antenna integrated to the walls of a cold container suitable for being transported on a vehicle, the antenna being comparable in size with the dimensions of the cold container.

According to a fourth aspect, there is provided a system for monitoring temperature with remote-access devices, said remote-access devices being energetically essentially passive, the system comprising a first reader device at a first location for forming first temperature data of said remote-access devices in a first environment, a second reader device at another location for forming second temperature data of said remote-access devices in a second environment, a memory for storing said first temperature data and said second temperature data.

According to an embodiment, the system comprises a temperature database for storing said first temperature data and said second temperature data in association with information indicative of the first reader device and the second reader device such as time information, location information or reader device identification. According to an embodiment, the system comprises a calibration database for storing calibration information for forming temperature values from said first temperature data and said second temperature data, said database being different from said first and second reader devices. According to an embodiment, the calibration database has access control for controlling access of a user of said first and second reader device to said calibration information.

According to a fifth aspect, there is provided a remote-access device comprising processing means, memory means and communication means for carrying out the method according to the first aspect.

According to a sixth aspect, there is provided a reader device comprising processing means, memory means and communication means for carrying out the method according to the first aspect.

According to a seventh aspect, there is provided a system comprising processing means, memory means and communication means for carrying out the method according to the first aspect.

According to an eighth aspect, there is provided use of an energetically essentially passive remote-access device for monitoring temperature in a food chain with the help of reader devices.

According to a ninth aspect, there is provided use of a remote-access device according to the second aspect for monitoring temperature in a temperature managed chain with the help of reader devices.

According to an embodiment in any of the above aspects, temperature data is at least one of a group of local oscillator frequency information, raw temperature data, temperature information derived from temperature data, uncalibrated temperature value and values, and calibrated temperature value and values.

### Description of the Drawings

In the following, various embodiments will be described in more detail with reference to the appended drawings, in which
- Figs. 1a and 1b: show block diagrams of an RFID tag and a reader device;
- Figs. 2a and 2b: show tags with application data stored in the tag memory, and with application data stored in the tag memory and protected by an access key;
- Figs. 3a and 3b: show a system and a method for manufacturing tags for temperature monitoring;
- Fig. 4a, 4b and 4c: show a diagram of a food chain, a method for temperature monitoring in a food chain, and a corresponding example of a temperature curve (desired and actual) of an item in a food chain;
- Figs. 5a and 5b: shows reader devices for temperature monitoring, and a system for temperature monitoring with a number of tags, reader devices and networked computers;
- Figs. 6a and 6b: show a diagram of exchanging temperature monitoring responsibility in a transportation chain, and a method for monitoring temperature in such an exchange;
- Figs. 7a and 7b: show a diagram of the concept of a transportation leg with a temperature profile of an item, and a method for controlling temperature and/or time of an item during, before and after a transportation lap;
- Figs. 8a and 8b: show a diagram of controlling the location and/or temperature of an item e.g. in a warehouse, cooling container or a display shelf based on monitoring, and a method for the same;
- Figs. 9a and 9b: show a diagram of storing and preparing food at the consumer and a method for the same; and
- Fig. 10: shows a diagram for creating, storing, delivering and using information related to temperature monitoring.

### Detailed Description of the Embodiments

In the following, several embodiments will be described in the context of radio frequency identification (RFID) tags. Different embodiments have applications widely in any environment where temperature monitoring capabilities with small devices having a limited power supply are needed.

Earlier remote-access devices used for temperature monitoring may be expensive and may require maintenance. This makes it difficult to use a single remote-access device for a longer time. It has been realized that this may further cause gaps in the temperature-monitored chain. For example, manufacturing remote-access devices that are suitable and hygienic enough for monitoring the temperature of food items may be expensive and large in size, and the devices may need to be cleaned regularly. This may make it necessary that the monitoring devices are replaced at points of loading and/or unloading of cargo, or at times when the items change owner. In practice, a monitoring device is removed from a food container, and replaced at a later time by another monitoring device. This allows there to be gaps in the monitoring of the food items, if the time between removal and replacement of the monitoring device is prolonged. This may make it difficult to detect the spoiling of items during times when they are not monitored.

The methods, arrangements and devices make it possible to alleviate the described problems. For example, remote-access devices may use a local, small component for measuring temperature, and the determination of temperature may happen elsewhere than in the remote-access device. This may allow the remote-access devices to be energetically essentially passive, and therefore they may be made small, durable, long-lived and cheap. This, in turn, may allow the remote-access devices that are used for monitoring temperature to remain attached or closely associated with the item for a long time. A monitoring device may be attached or embedded in the item at an early stage, and remain attached in the item despite of change of ownership or change of physical location. For example, a remote-access device may be attached to a food container when the food is packaged, remain attached during transportation, storage, display for sale, and refridgeration at home, and removed only right before preparing the food, or even stay attached to the food to assist in preparing the food e.g. in an oven.

Passive tags may be affordable in price, which makes it possible to have a large number of tags attached to an item. For example, a food container may have a plurality of tags, some of which are embedded in the food or otherwise inside the container, some may be on the interior surface of the container, and some other tags may be on the outside surface of the container on different sides. This way, the simple operation and affordability of a tag may make it possible to provide a more accurate individual monitoring of items. In addition, instead of having one or some tags per pallet, the affordability of the tags according may allow to place tens of tags in one pallet, for example, one, two or three tags per item in the pallet. This may allow efficient and accurate monitoring of the temperature distribution in a pallet. Yet further, due to the small size and the fact that the passive tags are lightweight and can be easily attached to items without the need to remove them, tags may be placed in such positions on the pallet where more sizeable and heavy active tags could not be placed. For example, lightweight passive tags can be placed on top of and high on the sides of a pallet, where active could fall off or be destroyed when the pallet is being handled.

Furthermore, because of being affordable, there is no need to remove or collect the tags from the items after the cold chain transport for re-use but instead the tags may remain on the items and the tags may be used for normal RFID identification throughout the lifetime of the product.

Monitoring of the temperature of the remote-access device may happen using one or more reader devices and/or monitoring systems. For example, one reader device may be used during transport, another during storage, one device may be used at a loading platform, yet another one at the cold display shelf. Even a refridgerator or an oven may be a reader device. The temperature monitoring results at different times and at different locations may be stored in the remote-access device memory, at one or more readers, or at a central system where they can be retrieved. This allows gapless monitoring of the items, since the remote-access devices used for monitoring are not removed and replaced by new ones, and even the time and the location associated with the temperature may be seamlessly tracked.

As described, determination of temperature values may take place at a different time and place than the determination of the temperature data, that is, the actual temperature values may be formed from raw data at a different instance. For example, access to calibration information may be restricted to those who purchase access to it in a database, or access to calibration information may be reserved for authorities only. The calibration of the tags may be performed at time of manufacture, but the calibration information may be restricted in access. Calibration may also take place during use of the tags, or even later when the tag is no longer used for monitoring. In this manner, calibration may be carried for those tags only whose temperature history is needed with more accuracy. For example, if a food item is suspected of having gone bad, an authority or a receiver of the food item may perform calibration or access earlier formed calibration information in order to determine accurate temperature history for the food item. In this manner, the party who is responsible for the food item going bad may be identified.

In a similar line of thought, the temperature data may be in a form where it is not possible to determine the actual temperature value from the temperature data without the calibration information. The temperature data may in this manner be stored openly e.g. onto the tag memory without a risk of tampering, since the calibration information is known only to the parties who have access rights to it, and only they can form the actual temperature values from temperature data.

It has been noticed that certain advanced applications of RFID tags would require active RFID tags (such tags that have a power supply), and that this would in turn make the tags more complicated and more expensive. Alternatively, straightforward implementtation of advanced functionality on passive RFID tags would increase the power consumption of the tags and thereby reduce the effective reading range or operational range of the tag. Various embodiments are envisioned to be used with RFID tags that are energetically essentially passive, that is, with tags that operate essentially while being in the reader field and being able to draw energy from the field.

In various embodiments, some of the processing required by the advanced functionality of a passive RFID tag may be carried out in the reader device or elsewhere in the system. This makes it possible to reduce the power consumption of the RFID tag and for the tag to have an improved operational range. The tag electronics may be kept simple and thus usable in weaker reader fields and/or longer reading ranges. On the other hand a need for powerful readers to compensate for the tag power consumption may be reduced. The latter benefit may be significant in some environments with many readers in the same area and/or where interfering electromagnetic fields need to be kept to a minimum.

Yet further, the simple arrangement of the advanced functionality, e.g. that of measuring or monitoring temperature information, may allow to use tags that are essentially permanently associated with the item whose temperature is being monitored, i.e. the tags are not removed when the items change owner. This may allow to monitor temperature e.g. of food items in an essentially gapless way. Earlier, the monitoring devices would be removed when there is change of ownership, the devices would need maintenance and they would need to be kept clean. This gave rise to time periods when the items were not monitored. In an operation, the tags may stay attached to the items, and monitoring may happen using the same tags, but with different reader devices perhaps owned and controlled by different parties in the temperature-managed chain.

In various embodiments a surprising feature of some password memory fields of RFID tags and other devices may be utilized. Namely, in some devices, a password field may be implemented for the sake of gaining access to some functionality, the password being a so-called shared secret, a signature, or derivable from known data by a secret algorithm. Once a password has been set in the memory, it may not be needed for anything else than comparing with an incoming password candidate. The password may therefore, surprisingly, be used to store application data, in other words, application data may be encoded into a password. Thereby the password may now serve two functions: operate as a password and carry application data for reading. This may be advantageous in devices that otherwise have little memory or have no tamper-proof memory (a password field may often be implemented in a tamper-proof manner). In addition, as a further surprising effect, some password fields may be protected by another password, and thereby such a field may serve as secure storage for application data. The above advantages may be present in any electronic device, and they may be especially advantageous in devices that are simple and energetically essentially passive. This implementation may further help in reducing the cost and complexity of remote-access devices used for temperature monitoring in a temperature-managed chain.

One or more password fields on the tag may be used for storing application data such as the calibration data or the temperature data or temperature value history. Other memory than password memory may be used for storing application data. The password may contain the complete application data, or only a part of the application data. The password may contain one or more addresses from where the application data may be retrieved. The address may be e.g. a memory address or a memory identifier for accessing a certain location or a certain range of a memory. The address may be a pointer to a directory, a file name, identifier of blocks of data in a memory or in a data file. The address may point to another device, e.g. to a reader memory location. The address may be a hyperlink such as a hypertext link or an internet address. The address may comprise a part of a complete address, whereby the part of the address may be complemented with a stem or a range to make the address complete. For example, the address may be "tid12345678.doc" and to obtain a complete address, the address may be complemented by a stem "http://www.tagstore.com/data/" to obtain the internet address "http://www.tagstore.com/data/tid12345678.doc". The password may contain partial or complete application data and in addition a partial or a complete address where further application data may be found. The password may also contain an access key or information for deriving an access key or the password may be an access key to accessing the data at the address specified in the password. In this way, the password may contain application data, and some or all of the application data may be used as an access key to access data at an address specified in the access key. A part or a whole of the address data may also be used as an access key or may be used to derive an access key. In this manner, e.g. calibration data for a certain tag may be stored at a web site and may be accessible by reading the information from the password field on the tag. Alternatively, the calibration data may be stored directly in the kill password memory of a tag, and accessed by providing an authentic access password.

Functionalities such as computing a measurement value and managing information security may be carried out in the reader or a network computer, and implementing such advanced functionality in a traditional manner could increase the power consumption of the tag significantly. A novel arrangement according to some embodiments therefore also makes it possible to implement advanced functionality to a passive tag. For example, a temperature measurement may be implemented using a passive RFID tag wherein some of the measurement processing is carried out at the reader or the rest of the system. The various embodiments also make it possible to implement storing advanced functionality codes and/or advanced functionality data into a password field, and the password field may be protected from unauthorized access by a further password. There may be temperature data, calibration information, reader or user identification information or other data stored in the memory.

In certain cases it has been noticed that it may be problematic if it is not known what operations the rest of the system is required to carry out. These operations may e.g. be such that they are not governed by any standard such as the UHF Gen 2 standard, e.g. temperature measurement, calibration, storage of information, or temperature range information. An advanced functionality code has been invented to alleviate this problem. An advanced functionality code is a piece of information associated with the tag and communicated to the reader (or the rest of the system) so that the advanced functionality provided by the tag is then known. For example, an advanced functionality code may indicate that a passive tag provides an advanced functionality of a temperature measurement arranged so that part of the required processing is carried out at the reader device. The tag may send this advanced functionality code to the reader device, and the reader may then adjust its operation accordingly. As another example, the advanced functionality code may indicate an allowed condition for using or accessing the tag, for example by indicating who is allowed to used the tag, when the tag is allowed to be used, or a geographic range where the tag is allowed to be used. The advanced functionality code may be stored into a password field. As yet another example, the advanced functionality code may indicate that the tag is capable of being used in a temperature monitoring system, and the code may further indicate what kind of information exists on the tag, whether the tag contains temperature data, calibration data and so on.

In certain other cases it has been noticed that carrying out an advanced functionality in a distributed manner between the tag and the rest of the system may require some additional data that is not easily available to the system. For example, such additional data may be advanced functionality data that can be used in carrying out the advanced functionality of the tag. The advanced functionality data may for example be information specific to the tag to enhance the advanced functionality, a mathematical formula, or an access key or access code, or any other data that are specific to the tag, specific to the advanced functionality, specific to the system or otherwise associated with the tag. The advanced functionality data may be carried on the tag in a memory, or it may be accessible to the system by means of identifying the tag and using the identifier as key to accessing the advanced functionality data. The advanced functionality data therefore enables the use of the advanced functionality of the tag, or improves the use of the advanced functionality. The advanced functionality data may be wholly or partly stored into a password field. For example, if part of the advanced functionality data is stored into a password field protected by an access password, using the advanced functionality may be prevented even though some advanced functionality data resides in a normal, accessible memory.

The advanced functionality code and the advanced functionality data may be stored on the chip or elsewhere on the tag either in easily accessible form or in protected form for example behind an access key or in encrypted form.

The embodiments provide advanced functionality for RFID tags and systems employing RFID tags, and a way for storing related information in an efficient and secure manner. The RFID tags and readers may operate according to a standard, and the advanced functionality code and advanced functionality data may be used to enhance the operations of passive RFID tags. For example, the RFID tag may carry in its memory the information necessary to carry out a function that goes beyond the standard. As an example, the determination of temperature may be considered, and the calibration information for the temperature measurement may be stored in the password memory of a tag. Further, temperature readings may be encoded into a password memory of a tag to store temperature history information on the tag. This may e.g. prevent accessing the calibration information stored on the tag by parties in the temperature-managed chain, but allow authorities or the end user to access the calibration information and thereby find out the temperature history of the data. Such an arrangement may be advantageous for preventing tampering of the temperature data, since the temperature data may not be in a form that can be interpreted by the party that is responsible for keeping the monitored item in a correct temperature.

An arrangement where numerous, perhaps hundreds or thousands of tags are attached to products being transported, and a reader device monitors the temperature of these tags en route may also become feasible with the tags. The reader device may not have access to calibration information, or the calibration information may not even have been formed yet. This enables a monitoring party (such as an official authority) to calibrate the tags later, and perhaps take samples from the large tag population and determine temperature histories for these sample tags only, in order to ensure that items en route have been in correct temperatures.

For some applications it may suffice to use the advanced functionality code only, and advanced functionality data may not be required. For some other applications, the advanced functionality data may contain information that is necessary for the use of the advanced functionality, or the advanced functionality data may enhance the operation of the advanced functionality. The advanced functionality code AFC and the advanced functionality data AFD may for example be such that the AFC informs the reader that the tag is suitable for temperature measurement, and the AFD provides information to be used in the determination of the temperature. The AFC and/or the AFD may be stored wholly or partially in a password memory of the tag.

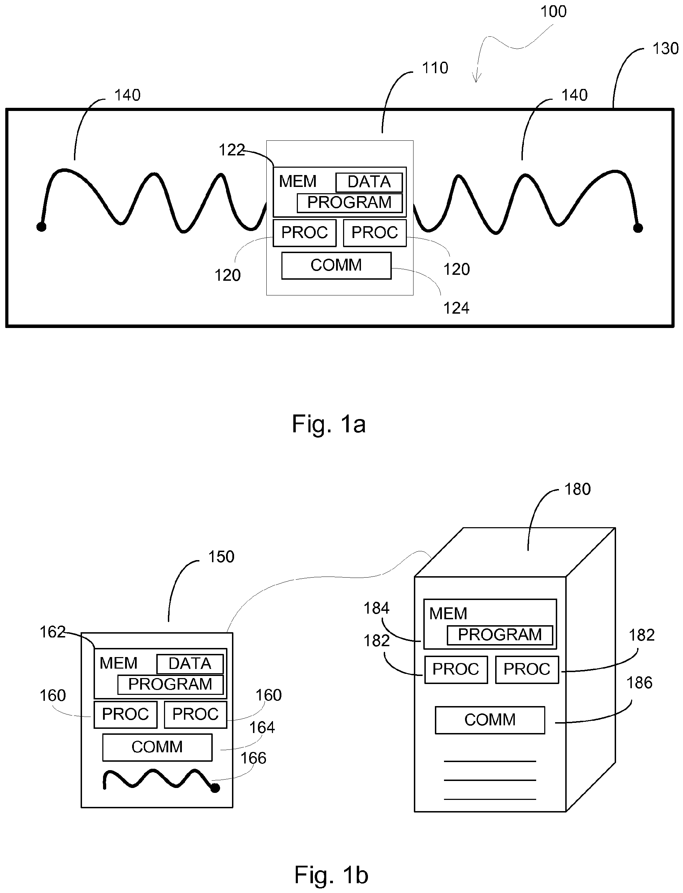

Figs. 1a and 1b show block diagrams of an RFID tag and a reader device, respectively. In Fig 1a, a passive RFID tag 100 according to an embodiment is shown. The tag comprises a chip 110, a protective surface 130 and an antenna 140. The antenna 140 is electrically coupled to the chip 110, and the chip and the antenna are formed inside the protective surface 130. The chip may comprise analog and digital (logic) circuitry to perform its operations, and/or it may comprise one, two or more processors 120, memory 122 as one, two or more memory sections and a communication module 124 such as a radio frequency modulation circuit coupled to the antenna 140. The program and/or logic may be in the form of microcode for a processor, a gate arrangement and/or programmable logic. There may be an oscillator for determining an operating frequency for the processor.

The memory 122 may comprise executable instructions for the processor, data and information related to the operation of the tag such as en electronic product code, tag identification, check sum, passwords like an access password for accessing the tag, and user data. Some of the memory may be read-only memory, and some of the memory may be writable. The memory may be write-once memory, whereby it is programmed in an early phase in the life span of a tag, or it may be write-protected by an access password. The memory may contain an access password for verifying access rights to some functionality or to a memory area. For example, an access password may be residing in the memory, and by sending the access password to the device, access is granted to a memory area. The memory area may then contain a kill password, and sending the kill password makes the tag turn inactive, i.e. kills the tag. It has been noticed that it application data may be, surprisingly, stored into the kill password area, since reading the kill password area may not kill the tag.

The memory may contain an advanced functionality code and advanced functionality data for using advanced functionality of the tag. The advanced functionality code may indicate the advanced functionality that the tag is capable of. Likewise, the advanced functionality data may be data that can be used in employing the advanced functionality of a tag. The memory may also contain application data. The protective surface 130 may be made of plastic, paper or any other suitable material, preferably material that is flexible. The material may be electrically and magnetically non-conducting in order not to obstruct the operation of the antenna 140, or the material may be weakly conducting or conducting. The tag contains no battery for powering the processor. The basic operation of the tag is to extract energy from a reader signal, and to respond to the reader signal. This responding may happen by employing back-scatter modulation of the radio frequency field (e.g. for UHF tags), or by varying the load imposed by the tag on the magnetic field (e.g. for HF tags). Typically, the tag may send an electronic product code (EPC) and/or a tag identifier (TID), or an universal identifier (UID) code, EAN code, or any serial number as a response.

An RFID tag or a device may operate according to a standard. For example, the air interface may be standardized to enable interoperability of tags and reader devices. The air interface may operate according to an UHF standard wherein the tag utilizes back-scattering modulation in communication. The air interface may operate according to an HF standard wherein the tag utilizes load variation in the magnetic field. The various pieces of information stored in the tag and sent by the tag such as the EPC code may be standardized e.g. according to a Gen2 standard. The tag and/or a reader device may be standardized as a whole.

The remote-access device or a tag may have various forms. For example, the tag may comprise an inlay placed inside plastic protective layers, or inside paper or cardboard. The remote-access device may also be a tag embedded in an object, e.g. a tag inside a food package. The remote-access device may also be any object capable of operating according to the various embodiments and being otherwise energetically essentially passive. For example, the remote-access device may be a food package, container, box, barrel, pallet, vehicle or a piece of furniture like a shelf. It also needs to be understood that a remote-access device can be without definite form or it may not be an end-product. For example, a chip for an RFID device, or the combination of a chip and an antenna may form a remote-access device. Fig. 1b shows an RFID reader device 150 according to an embodiment for reading information from tags. The reader device 150 comprises digital and analog circuitry for communicating with RFID tags. The reader device may comprise one, two or more processors 160, memory 162 as one, two or more memory sections and a communication module 164 such as a radio frequency modulation circuit coupled to an antenna 166. The memory 162 may comprise executable program code for the processor 160, and some of the program code and other means may be for utilizing an advanced functionality of an RFID tag based on an advanced functionality code and utilizing advanced functionality data to obtain an advanced functionality result. The memory 162 may also comprise program code for any application, and program code for reading/writing application data from/to the tag. The reader device 150 may be operatively connected (e.g. by means of a computer network, a fixed data connection or a wireless connection) to a computer or server 180. The computer or server 180 may comprise one or more processors 182, memory 184 and communication means 186 for communicating with computers and reader devices. The server 180 may comprise database functionality for storing information collected from tags through reader devices, and/or it may comprise means for utilizing the advanced functionality of a tag, e.g. by processing information received by the reader device and computing or otherwise obtaining an advanced functionality result. The server 180 may be networked with other servers, and the server 180 may alone or together with other servers provide a network service for utilizing the advanced functionality of RFID tags.

To indicate its capability to perform advanced functionality, the tag may sends an advanced functionality code AFC to the reader device. This sending may be in response to a request, or it may be spontaneous and in addition to standard operation. The sending of the AFC may happen anywhere during employing the advanced functionality, e.g. before the operation, during the operation or as a last step. The RFID tag sends the advanced functionality code to the reader device and/or the rest of the system so that it may be determined that the tag is capable or suitable for providing advanced functionality. The RFID tag may receive a request from the reader device to send information according to the advanced functionality indicated by the AFC. Alternatively or in addition, the tag may assume a mode of operation based on sending the AFC so that it will next send information needed for employing the advanced functionality. The tag may send advanced functionality information according to the advanced functionality code AFC. This information may be such that the reader device may determine an advanced functionality result using the information e.g. in computations or by complementing the information with other data. For example, the tag may send information that is useful in determining the temperature of the tag, whereas the tag alone may be unable to determine its temperature (since it may not have a sensor and a power supply to enable this). The tag may also send information it receives from another device e.g. via a wired or wireless connection. This may enable the tag to operate as a relay station or as a transceiver (receiver-transmitter) and provide another device with an RFID communication channel. The sending of information may happen in a plurality of steps, for example as responses to a plurality of requests from the reader.

The advanced functionality code AFC sent by the tag may be a code stored in the user data area and accessed by the tag when it needs to be sent. Alternatively, the AFC may be part of another code, such as the electronic product code (EPC) or the tag identifier, or an access password, or any other piece of information stored on the tag. The AFC may be a number, a series of characters and numbers, or a bit sequence. The AFC may comprise multiple non-contiguous parts. The AFC enables the reader device and/or the system beyond the reader device to determine that the tag provides an advanced functionality. The tag may have specific physical or programmatic means for providing this functionality, or the tag may be a regular tag that has been determined to be suitable for use in employing the advanced functionality. The advanced functionality code may indicate that the tag is allowed to be used for the specific functionality, e.g. the tag may be approved or licensed by the manufacturer for use with this functionality. The presence and use of the AFC may indicate that the tag is able to perform the advanced functionality with certain accuracy. In addition, the AFC may indicate that the tag carries additional information such as advanced functionality data for using the advanced functionality. The advanced functionality code may also indicate the configuration of the tag, e.g. to indicate whether the tag is able to store advanced functionality results and/or whether some of the data on the tag is stored in a protected form. For example, an AFC for temperature measurement may indicate that the tag contains data for the temperature determination, that this data is in protected form, and the tag is able to store temperature values determined by the reader. There may also be more than one advanced functionalities provided by a tag, associated with one or more advanced functionality codes.

The reader device may request the RFID tag to send any advanced functionality code it has. This request may be a separate request or it may be a request according to a standard, whereby the tag interprets a standard request to mean that it should send the AFC. The reader device may then receive an advanced functionality code and determine that the tag is capable of providing the advanced functionality. Based on receiving the AFC, and/or based on other knowledge, the reader device then requests information from the tag, wherein the information is needed for using the advanced functionality. This information may be regular information provided by the tag according to a standard, or it may be additional information. The requesting may happen in a plurality of steps, or in one step. When the reader has received the information, it may then use the information to utilize the advanced functionality according to the AFC. For example, the reader may determine the temperature of a tag from timing responses of a tag by carrying out computations based on the response and/or accessing data tables. The reader may also improve the use of the information by utilizing other data indicated by the AFC. For example, the reader may use a key to access information stored on the tag for the temperature calculation.

The reader may request the tag to send an advanced functionality code AFC to indicate that the tag is capable of being used in a temperature measurement. In response to this request, or in response to a standard request, the tag may send an advanced functionality code AFC to indicate the type of the tag and the capabilities of the tag. For example, the AFC may indicate how accurate the temperature measurement with this tag may be, or that the tag may store temperature data. The reader may request oscillator information to determine the temperature and the tag may respond by sending this information. These steps may be repeated as necessary. Using the received information, the reader may alone or with the help of the system determine the tag temperature based on knowledge of the local oscillator properties and the functionality of the tag. The local oscillator frequency changes with temperature, and this affects the oscillator information.

The reader may send an access password to the tag to gain access to application data e.g. stored at least partially in another password such as the kill password. The tag may allow access to the requested information. The reader may then send a read request to the tag to read the password e.g. to read the kill password of a tag. It needs to be noticed here that sending the kill password from the reader to the tag would cause the tag to become inactive, but reading the kill password may be safe in this sense. Since access has been granted to read the kill password, the tag may send the kill password to the reader. The (kill) password may contain as such or in encoded form some application data, e.g. calibration data for determining a temperature of the tag. It needs to be understood that some of this information may also reside in the system e.g. in a database as explained earlier. When the reader or the system has received the data contained in the kill password, the received password may be converted to calibration data (e.g. coefficients for converting the oscillator data to a temperature value). A temperature may then be determined by using the oscillator information and the calibration data, and possibly some other data.

The methods carried out by the RFID tag and the reader device may be interlinked so that some the method steps of the RFID tag happen in response to the method steps of the RFID reader device and vice versa.

As described earlier, the tag may send information for utilizing an advanced capability according to an advanced capability code AFC. The sending of the information may also happen without any advanced capability code. The tag sends information related to an advanced capability, possibly as a response to a request from a reader. Related to the use of advanced functionality, the tag may carry additional data for using the advanced functionality. For example, the tag may comprise data for a temperature measurement or another type of measurement, or the tag may contain a section of data that can be utilized in using the advanced capability. The tag may fetch the AFD from a memory either internal to the chip or in some other manner operatively connected to the tag. The tag then sends this advanced functionality data AFD to the reader device so that the AFD can be used or stored at the reader device and/or one or more other devices in the system for utilizing the advanced functionality.

The advanced functionality data AFD may be a data table or a data structure, functionality parameters, a definition of a mathematical function or any other data structure or object that may be used in utilizing the advanced functionality. For example, the AFD may comprise a single number, a series of numbers, a data table, a plurality of data tables, a data structure, an object definition and data, a database, and/or any combination of these alone or together with other information. The AFD may comprise a single packet of data, or the AFD may be distributed across a plurality of packets. The AFD may be complete and usable as such, or it may be such that it is augmented by other data and/or code that resides elsewhere in the system to save memory on the tag. The AFD may be intended to be used in the advanced functionality, or it may be intended for presenting the result of an advanced functionality (such as HTML code or XML representation, or a Adobe PDF file, Word document or Excel worksheet).

As described earlier, the reader device may request information relating to the advanced functionality, and receive the information. This information may be received at any time during the employing of the advanced functionality, e.g. before, during or after any receiving of advanced functionality data. The reader may then, with respect to an AFC and/or based on other knowledge, request advanced functionality data from the RFID tag. The tag may also send the data on its own so that a request is not needed. The reader device then receives the AFD and utilizes the AFD with the received information to e.g. obtain an advanced functionality result. The use of the AFD may happen at the reader device and/or elsewhere in the system. The AFD may be in protected form, whereby the reader device may form and/or use a key to access or decrypt the AFD before using it.

The tag may send information relating to an advanced functionality so that a reader device can use this information to utilize the advanced functionality of the tag. An advanced functionality result may be derived by the reader and/or the rest of the system. The tag may then receive the advanced functionality result alone or together with other data from the reader or from another device. The tag may store this advanced functionality result into a memory together with earlier received advanced functionality results, with other data and/or alone. The tag may store the result as such or the tag may process the result or combine it with other data before storing the result. The tag may even form advanced functionality data AFD by using the received result. The tag may store the received data and/or result in a protected or unprotected form, e.g. by using an access password and/or encryption methods. There may be other information received and stored by the tag, too, such as time and location information. The tag may also send advanced functionality data to the reader. For example, the tag may receive the temperature determination result from the reader and store it onto its memory in protected form behind a password or in encrypted form.

The reader may receive information from the tag related to advanced functionality, as explained above, possibly with advanced functionality data AFD. The reader device and/or the rest of the system may then determine an advanced functionality result, as explained earlier. The reader device and/or another device in the system may then choose to send the result back to the tag so that it can be stored on the tag in addition to or instead of storing it in the reader or in a database in the rest of the system. For example, the reader may send the result of a temperature computation to the tag so that the tag can store the temperature information at the tag. The reader may send other information than the result to the tag, too, for example location information and/or time information. This may allow the tag to e.g. store a temperature history with time and place of the item whose temperature is being monitored. This may be especially useful e.g. in cold chain management of perishable items or other temperature managed chains, where knowledge and control of the temperature history of an item is of importance.

The advanced functionality data may be in a protected form in either the tag memory, in the reader memory or in an external database. The protection may have been carried out so that the AFD resides in a memory area protected with an access key, or so that the AFD has been encrypted or scrambled using an algorithm dependent on an access key. The AFD may be wholly or partly stored in a password field of the tag, and the rest of the AFD may reside in normal memory on the tag, or in the reader, or in an external database.

The access key may be stored on the tag memory or a seed for generating the access key may be stored on the tag memory. An algorithm may be used to generate the access key from the access key seed, wherein the algorithm is such that it is unlikely that two different algorithms would produce the same exact access key. Moreover, it may be desirable that the algorithm is such that two different seeds are unlikely to produce the same access key.

The seed or the access key may be a value stored on the tag, for example the electronic product code or part of it, the tag identification or part of it, or another unique identifier or a combination of these or any parts of these. As an example, the access key may be an EPC (electronic product code) Class I Gen2 compliant access key for accessing locked memory areas of the tag. The EPC access key may be calculated from the EPC on the tag e.g. with a hash function, an XOR function with a mask, as a digital digest or another cryptographic key. The EPC may also be used as an index to a table of access keys e.g. cryptographic keys. The length of the key may be less than the length of the seed, it may be the same length or it may be longer. For example, the EPC may be 96 to 240 bits long, and the access key may be 32 bits long. Bit puncturing may be used in shortening the key and bit padding may be used to lengthen the key. A memory area containing data for the advanced functionality, e.g. the AFD, may be locked using the access key and can only be opened using the access key formed from the EPC or another seed. For example, the AFD may be stored in a kill password of a tag, protected by an access password. The locking and opening or encryption and decryption may be done in a symmetric manner wherein the encryption and decryption keys are the same, or it may be done in asymmetric manner, where the keys are different. A public key infrastructure (PKI) may be used for the latter. Every tag in the system may have a different access key (if the EPC or other seed on the tag is different), and the reader or the system can calculate the access key using the seed from the tag. Using this access key, the reader or the system can access or decrypt the AFD located on the tag or in an external database.

As an example, temperature calculation may happen so that the reader requests information from the tag that it can use for temperature measurement, and in order to achieve a result, it uses data stored on the tag in the measurement. The reader may have determined by using an AFC that the tag is suitable for temperature measurement. The advanced functionality code AFC may be part of the electronic product code indicating, for example, that the item is a perishable product and therefore its temperature needs to be monitored. The AFD may be data for calculating or determining the temperature of the tag from local oscillator frequency shift polled from the tag. The reader may request the data from the tag, and the data may reside on the tag in protected form, e.g. on a protected memory area or in encrypted form. The reader therefore uses an algorithm to obtain an access key based on the EPC or tag identification, and then unprotects the data using this access key. The unprotecting may happen e.g. by opening a protected memory area on the tag or by decrypting the data. The unprotected data, for example calibration information, may then be used for calculating the tag temperature. The access key may also be used to write data onto the tag in protected form, e.g. in a protected memory area or in encrypted form.

The protection algorithm may be a secret algorithm known only to the reader device or the system, or it may be a widely public algorithm. The algorithm may depend on the advanced functionality code. The data protected on the tag may be advanced functionality data or it may be any other data.

The remote-access device may receives application data such as temperature data to be written to a memory, e.g. a password area. The received application data may be numbers, text, logical data, structured data or other, or the application data may be already formed into a format suitable for storing into a password field. The data may be converted to be suitable for storing into a memory space such as a password field, e.g. by packing, type conversion, mapping into discrete elements in a data table, or by another encoding, and possibly encrypted. For example, two 16-bit floating-point numbers may be received and their bit strings may be concatenated for storing into a 32-bit password field like the kill password.

The storing of the application data in password format into a password field may require an access to be granted for the operation. For example, an access password may be received, and used for granting access to write into a password field such as the kill password field. For example, calibration coefficients for temperature measurement may be stored into a kill password of a tag that is capable of being used for temperature measurement. The password functionality of the application data may still be in operation although the stored data in the password field is now application data. For example, a tag may still be deactivated by sending the kill password (containing application data) to the RFID tag.

The advanced capabilities of a tag with advanced capability code and advanced capability information may be carried on the tag in a protected form. The tag may send advanced functionality data AFD to the reader in protected form. The AFD may, in other words, be in encrypted or in scrambled form. The reader may then receive and store the AFD. The tag may send key information to the reader device and/or the rest of the system. It is possible that this tag key information is the EPC or the tag identifier and the seed or actual key information resides in a database in the system. The reader and/or another element in the system may received this key information. Using this key information, the reader or another element in the system may form an access key. This access key may then be used to unprotect or decrypt the received data, or to unprotect or decrypt other data related to the tag. The above phases may happen in the tag and at the reader or rest of the system in an independent manner or dependent from each other. The different phases may happen in another order than described here.

Alternatively, the tag may send key information to the reader device and/or the rest of the system. It is possible that this tag key information is the EPC or the tag identifier and the seed or actual key information resides in a database in the system. The reader and/or another element in the system may receive this key information. Using this key information, the reader or another element in the system may form an access key and send it to the tag. The tag may receive the access key and use it to unprotect or decrypt advanced functionality data AFD residing on the tag. The tag may then send the unprotected AFD to the reader. The reader may then receive the AFD and use it to utilize the advanced functionality. The tag may unprotect and send other data than AFD using the access key. The above phases may happen in the tag and at the reader or rest of the system in an independent manner or dependent from each other. The different phases may happen in another order than described here.

Alternatively, the reader may request advanced functionality data AFD or other data from the tag. The tag may fetch key information (e.g. EPC) from memory, and form an access key using the key information. The tag may then unprotect advanced functionality data AFD residing in the tag memory by accessing a password-protected memory area or by decrypting the AFD. The tag may then send the unprotected AFD to the reader device. The reader may receive the AFD and use it to utilize the advanced functionality provided by the tag. The above phases may happen in the tag and at the reader or rest of the system in an independent manner or dependent from each other. The different phases may happen in another order than described here.

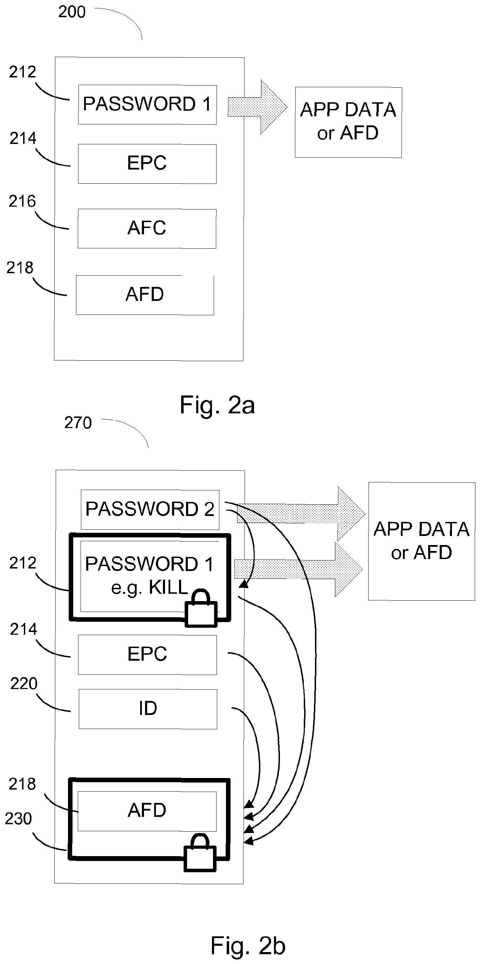

Figs. 2a and 2b show tags with application data stored in a password area, and with application data stored in a password area and protected by an access key. In Fig. 2a, a tag 200 or any other electronic device with application data stored in a password area is shown. The tag may comprise elements as described in the context of Fig. 1a, and has a memory for holding various pieces of information. There may be a password area 212 for storing a password, and for storing application data converted into a suitable form and for storing as a password, a memory 214 for the electronic product code and a memory 216 for the advanced functionality code AFC and a memory 218 for advanced functionality data AFD. The various memory areas may be implemented in the same memory, or they may be implemented in different memories. Some of the memory may be read-only memory, or write-once memory, or protected from unauthorized access in some way. In other words, the device (or tag) 200 is such that it contains application data in a password memory area (an area reserved for storing a password).

In Fig. 2b, a tag 270 with application data in a password area is shown. The tag comprises elements as described in the context of Fig. 1a, and has a memory for holding various pieces of information. There may be a password area 212 for storing a password and application data in/as the password, a memory 214 for the electronic product code and a memory 218 for advanced capability data AFD. The password area 212 PASSWORD 1 may be protected from read and/or write access by another password PASSWORD 2, e.g. an access password. One or both of the PASSWORD 1 and PASSWORD 2 may contain data indicative of application data, or application data as such. The application data may be extracted/decoded from the PASSWORD 1 and/or PASSWORD 2 fields by a separate operation, or by a simple type conversion. The various memory areas may be implemented in the same memory, or they may be implemented in different memories. Some of the memory may be read-only memory, or write-once memory, or protected from unauthorized access in some way. The tag may also comprise a tag ID or other identification information. The data area 218 has been arranged to be such that the AFD is stored in protected form, for example in a password-protected or encrypted memory 230. The memory 230 may be protected e.g. by encryption using as a password or encryption key or a seed for a password or encryption key at least part of one or more of the data in the ID field 220, the EPC field 218, the PASSWORD 1 area 212 (e.g. KILL password) or the PASSWORD 2 area. A tag may combine any or all functionalities as explained in the context of Figs. 2a and 2b.

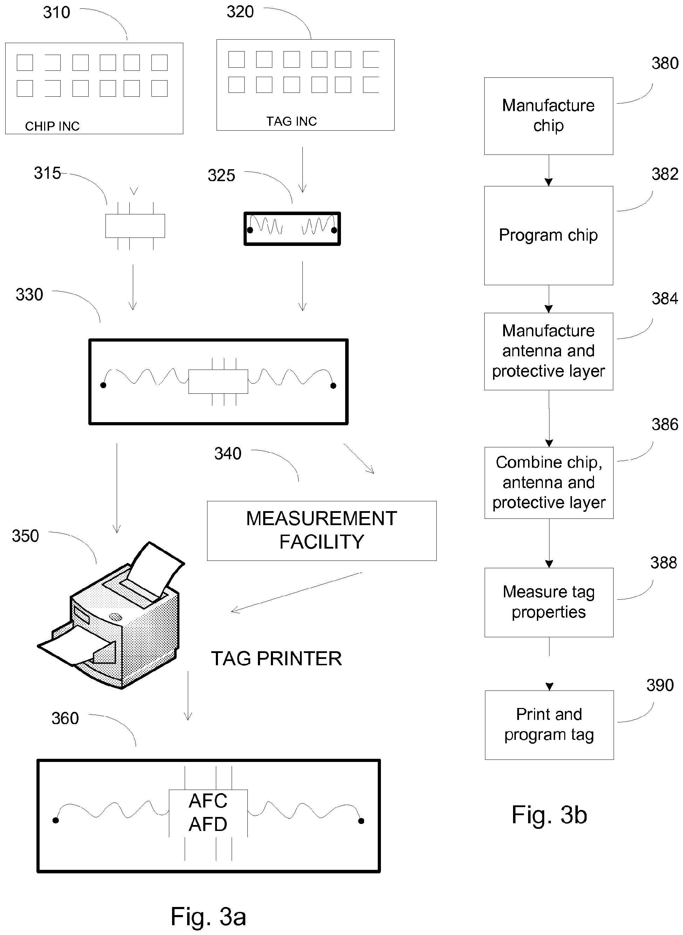

Fig. 3a shows a system for manufacturing tags with application data stored in a password memory. The chips 315 for the tags may be manufactured and/or programmed by one entity 310. The antennas and the protective layers 325 may be manufactured by one or more other entities 320. The different elements making up a tag may be then combined to form a tag 330. At the time of combining or at a different time, the properties tag may be measured at 340, for example to form advanced functionality data AFD to be stored into the tag memory. For example, the tag's temperature measurement capability may be calibrated and the calibration information may be stored into the tag memory. For example, the calibration coefficients may be stored in a kill password area of the tag. This may happen at any phase, e.g. during or after chip manufacturing, during or after combining the tag, or during printing (conversion), or in a completely separate phase. The tag may then be printed 350 at a facility where the tag is taken into use. The advanced functionality code AFC indicating the tag type and allowed operations, as well as the advanced functionality data AFD may be stored to the memory of the tag at this point, or the storing may happen at an earlier phase. The result of this process is a tag 360 with advanced functionality capability indicated by an AFC and supported by advanced functionality data AFD in the memory. The system in Fig. 3a may be implemented in a single facility by a single operator, or the different elements may be carried out at different locations.

In addition to calibration during manufacturing, the tags may be calibrated during transport. For example, the transport provider may provide an additional service where the tags (and the items to which they are attached) are run through one or more accurate temperature states, whereby the determination of calibration data for the tags becomes possible. The transport provider may provide the raw data with the accurate temperature data, or they may provide the actual calibration data. The calibration data may be provided free of charge, or there may be billing information formed alongside providing access to the calibration data e.g. in a database.

Fig. 3b shows a method for manufacturing tags with application data stored in a password memory. Some of all of the method steps may be carried out by a single entity, or the steps may be carried out by different entities. At phase 380, the chip for the tag is manufactured so that it can provide an advanced functionality. At phase 382, the chip is programmed, e.g. to contain program code and data for providing advanced functionality. At this phase, password areas on the chip may also be programmed, e.g. to contain application data such as calibration information. At phase 384, the antenna and the substrate layer are manufactured. At phase 386, the antenna and the substrate layer are combined with the chip to form a tag, which may be covered by additional protective layers. At this phase, password areas on the tag may also be programmed, e.g. to contain application data such as calibration information. It is to be noted that for so-called passive tags, there will not be an energy source on the tag, that is, they will be energetically essentially passive. The tags will draw their energy essentially from the read-out signal, as explained earlier. At phase 388, the properties of the tag may be measured for storing onto the tag or to be kept in a database for later access based on the tag identification. For example, calibration information may be determined and password areas on the chip may be programmed, e.g. to contain application data such as calibration information. At phase 390, the tag may be printed, that is, the tag may receive information such as an electronic product code. At this phase, password areas on the tag may also be programmed, e.g. to contain application data such as calibration information. At phases 386, 388 and 390, the tag may also receive advanced functionality data and an advanced functionality code. Password fields may be employed in this storing.

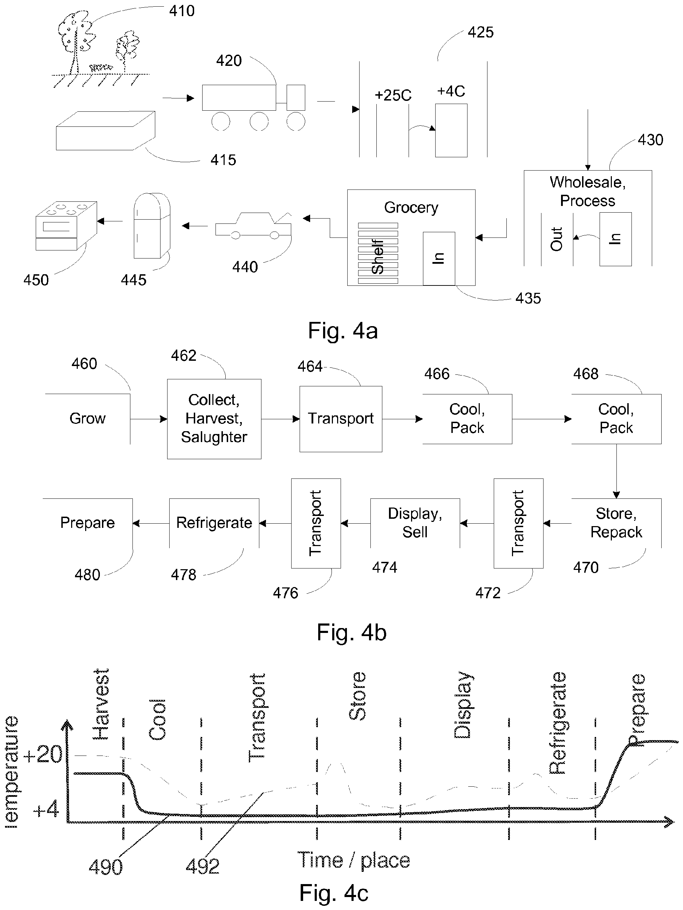

Fig. 4a, 4b and 4c show a diagram of a food chain, a method for temperature monitoring in a food chain, and a corresponding example of a temperature curve (desired and actual) of an item in a food chain. There may be one or more things monitored in a food chain in addition to temperature data. For example, the physical location of items may be monitored, as well as the time when they are in a physical location, or the time and location associated with a temperature measurement. Other environmental parameters such as humidity may also be added to the monitoring. Such monitoring and control information may be usable for maturing or spoiling goods such as food. For example, vegetables, dairy products and meat may need to be kept in cold so that they do not go bad or so that they do not develop harmful properties (e.g. bacteria), and monitoring with remote-access devices may provide this advantage. Further, many items like live animals, food products, chemicals etc. may be such that they would suffer from both too high temperatures and too low temperatures such as freezing, and monitoring and managing the temperature may provide advantages.

An example of a temperature managed chain is a food chain such as in Fig. 4a. The food chain starts with harvesting, extraction or other process 410 where the food item is first created. The item may then be boxed in a container 415 and transported by a vehicle 420 to a cooling station 425. From the cooling station 425, the items may be transported to a wholesale storage and/or a processing facility 430. The ready food items are then transported to a retail store 435, where they may be stored in storage for a while and then displayed for sale. A consumer may buy an item and transport it home in a car 440, and place the item in a freezer or fridge 445 at home. The food may then be prepared e.g. in an oven 450. In the chain, the temperature of the item may be controlled such that the item has a desired state at a desired point. The transport route and/or time may be selected based on the predicted maturing of the items, which enables to minimize warehouse space needed for the items. In addition, such a planning based on the predicted condition of the items and the applied temperature profiles ensures that the items arrive at a correct state to their destination.

For example, the best before date may be changed based on the monitoring, and at home, the item may be thawed and prepared according to its temperature history. As another example, the temperature at a specific point e.g. during storage may be optimized such that the energy consumption for cooling is minimized without harming the item, and/or cooling power may be applied to those items that most need it. As a further example, the pricing of the items may be changed based on the temperature history. This may reduce food waste, since prime goods that have a worse temperature history than others may be sold at a lower price, thereby increasing their demand. All of the phases in Fig. 4a may have appropriately placed remote-access devices and readers for determining the temperature of the remote access devices.

In Fig. 4b, a method for use in a food chain such as the food chain of Fig. 4a is shown. In phase 460, the food items are grown, and the remote-access devices and/or tags may be used to control the growth environment. For example, tags may be attached to plants or animals, or embedded in the soil, to control the environment temperature, watering, shading etc. In phase 462, the food items are created by harvesting, collecting, slaughtering or other method. The best time for harvesting may be determined using the remote access devices such as tags so that the collected food items are at a cool temperature to begin with. At this point, the box or container 415 where the items are stored may have a remote-access device for monitoring, or even the food items themselves may receive individual tags by attaching or embedding. Monitoring the harvesting conditions may e.g. allow to reduce the amount of preservatives that are added to preserve the food items. The amount of preservatives added may be determined based on the monitoring.

At phase 464, the items are transported to a cooling facility. The transportation may take time, and the monitoring of the items may help in controlling the cooling process. When the food items are transported from one place to another, there are points where the responsibility of keeping the items at the right temperature also changes. For example, when the items are unloaded at a warehouse, the responsibility of the transporter ends and the responsibility of the warehouse keeper begins. This change and the associated monitoring should be made as gapless as possible to ensure that the food items are not spoiled in between the two temperature controlled places. In practice, keeping the items on the loading deck for a long time may be prevented by monitoring. At least, it may be known that a food item has been spoiled, and the responsible party for the spoiling may be identified more easily.

At phase 466, the items may be cooled and packaged, and in the cooling and packaging, the temperature history of the items may be used to control the process. For example, cooling power may be adjusted, and items may be shipped in and out from the cooling station based on their temperature history and their current temperature status. At phase 468, the items may be transported to a storage facility, and the temperature profile of the items during transport may be monitored and controlled. At phase 470, the items may be stored, and again, the storage temperature may be controlled, and items may be shipped to and from the storage based on their temperature history. For example, items that have a shorter life time may be shipped to a retail store sooner than other items. Further, the ripening of some products such as bananas may be ensured by monitoring the temperature history. Items may be classified and sorted based on their temperature history, best before dates or other properties derivable from the monitoring. At phase 472, the items may be transported to retail shop for sale.

At phase 474, the items may be placed on sale in a display, e.g. a cooling container. The items may be ordered for sale based on their temperature history, and the best before date may be adjusted based on the temperature history. The end user may then transport the item home in phase 476, and refrigerate the item at home in phase 478. The item is then finally prepared for eating in phase 480, and the preparation may be controlled based on temperature and the temperature history of the item.

Since the remote-access devices may be made small, inexpensive and maintenance-free, they may be attached to a food item throughout the whole chain, or at least over several parts of the chain. The new functionalities of such simple tags make it possible to use the temperature monitoring in new ways in the food chain. For example, since the temperature monitoring may be implemented in a seamless way, the items may be ripened or matured to proper state earlier in the chain. Alternatively, it may be ensured by monitoring that the items arrive at the destination in a proper state of maturity. The items may also be sorted and sold in the proper order indicated by the temperature history. Tags according may also be placed inside packaging in a sterile manner, since they do not need to be replaced, and no line-of-sight contact to the reader is needed. This allows more accurate temperature monitoring for each item. Furthermore, the tags may carry the temperature data in their memory, so that the temperature history is readily available for inspection. All this allows good process control in the food chain, e.g. priorization of items, following up maturing and preparation, temperature and time control in the process, placement of products, packaging in a proper temperature and so on.

Fig. 4c shows a desired and an actual temperature curve of an item in a food chain. The solid curve 490 shows a desired temperature profile for a perishable food item that should be kept in a cool temperature for maintaining good condition of the item. As can be seen from the curve, it is desirable to harvest the items in a relatively low temperature. Cooling should happen fairly quickly, and then the low temperature, e.g. +4 C, should be maintained throughout the chain. Finally, in preparation, the temperature should be brought up to the proper cooking range fairly quickly - or according to another wished profile. The curve 492 shows an actual temperature profile of an item as could be monitored by a remote-access device. As can be seen, the harvesting may happen at a temperature higher than desired, and the cooling process may happen slower, and may not reach the desired temperature. Problems in cooling during transportation may lead to warming of the items, and the same may happen in display at the retail store and the storage at home. Furthermore, there may be times when the temperature of an item is increased because there is no cooling in place. This may coincide with the change of responsibility for the item, such as happens between the transport and storage phases in the curve 492. If the actual temperature profile deviates from the desired one at some point, it may become necessary to compensate for the deviation by adjusting the desired temperature for the item at a later time. For example, if a food item has been in an excessively warm state at some point, it may be determined that the item must be kept close to zero at later stages.

It may be necessary to calibrate the temperature measurement using calibration data. This calibration may happen at the reader or at a separate computer, and the calibration may be done at the time of measurement or at a later time. The temperature monitoring may also happen so that the temperature data is not converted to a temperature value e.g. using the calibration data, but instead the temperature data is verified to be in a certain range or below a threshold. This range or threshold may be set e.g. in the tag memory, and the range or threshold may be frequency or timing information related to a local oscillator on the remote access device. In this way, the reading of the temperature data may be readily compared with the range or the threshold.

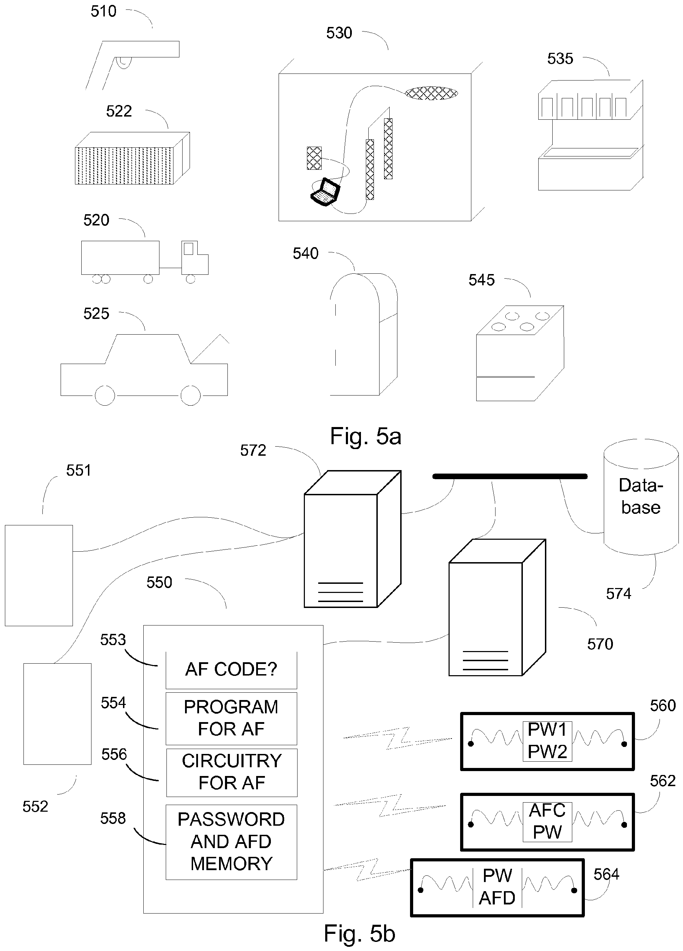

Fig. 5a shows reader devices for temperature monitoring. A reader device may be a hand-held reader 510 so that a human operator may use it for reading remote-access devices as needed. A reader device may also be permanently installed to a facility, or a larger, non-portable device. A reader device may also operate automatically so that it may periodically poll remote-access devices in the reading range, or it may detect e.g. optically when an item comes into a reading range. Such an arrangement may be installed near doors, on conveyor belts, or at check points along a production or processing chain. A reader may also be installed or attached to a vehicle or vessel such as a truck 520 or a car 525, or to a container 522 that can be transported with various vehicles. The reader may be installed in an airplane to monitor goods during flight. The reader may be a separate device from a vehicle or a vessel, or it may be integrated into the electronics and mechanics of the vehicle or the vessel. For example, the reader device may comprise an antenna integrated to the walls (side walls, ceiling or floor) of a cold container suitable for being transported on a vehicle, the antenna being comparable in size with the dimensions of the cold container. This may be achieved by embedding suitable antenna structures to the elements of which the container has been made, or that have been used to finish the container. Such elements may be e.g. plywood elements or insulator elements.

Different reader devices may be employed in a warehouse monitoring system 530. There may be hand-held readers and fixed readers operatively connected to the system, e.g. with a wired or with a wireless connection. Some of the readers may be installed to doors or gates through which goods pass when they enter or exit the warehouse, or when they are moved from one room to another, or when they travel along a guided route inside the warehouse. There may be long-range readers and short-range readers, e.g. installed to shelves, walls, floors or ceilings of the warehouse. For example, there may be a reader attached to the ceiling, whereby the reader may monitor remote-access devices in a large area. Readers may be positioned so that disturbances from metallic objects, humidity, and the number of other remote-access devices and readers is minimized.

Various cooling and heating devices may have integrated or attached readers, as well as estimation and recommendation units that calculate (based on the temperature history of items) how the items should be treated next. For example, a display shelf at a grocery store, or a cooling/freezing device 535 for food items may operate as a reader, or may have a reader attached thereto. A refrigerator and/or a freezer 540 for consumer use may have a reader module for monitoring temperature of the items being stored therein. An oven or other device for preparing food 545 may have a reader device for controlling the temperature of items being prepared. Such devices 535, 540 and 545 may provide an alarm, notification or other information on the condition of the items, e.g. by sounding a beep when an item's temperature exceeds a desired range. In this application, "exceeding" is understood to be any deviation towards higher or lower temperatures from a desired range. The devices 535, 540 and 545 may also alter their operation based on the monitoring results and/or the temperature monitoring history of the items being disposed therein. For example, a freezer may increase its cooling power when a warm item is placed inside the freezer, a refrigerator may control its temperature based on the temperatures of the items inside, and an oven may adjust the heating process (temperature and time) based on the temperature of the items inside the oven.

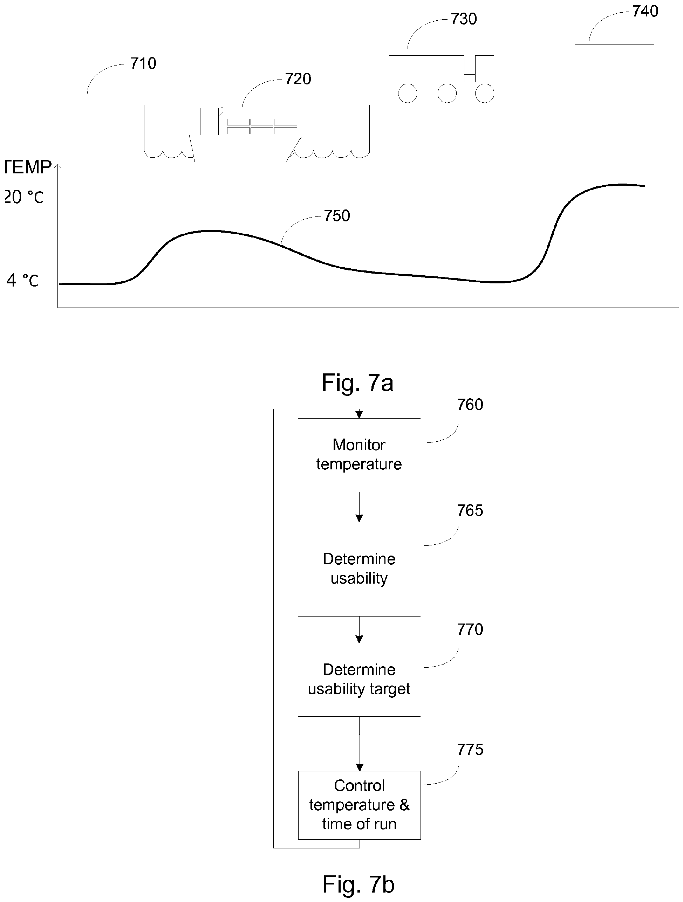

Fig. 5b shows a system a system for temperature monitoring with a number of tags, reader devices and networked computers. The system may comprise a number of reader devices 550, 551 and 552. The reader devices may be geographically at the same location or at different locations. As explained in the context of Fig. 7, the reader devices may comprise blocks for determining the advanced functionality 553, advanced functionality program 554, circuitry for advanced functionality 556 and memory 558 for advanced functionality data and passwords. The system may comprise a number of tags 560, 562 and 564. The tags may be capable of similar or different advanced functionality, and may contain similar or different advanced functionality codes AFC and advanced functionality data AFD. The tags may comprise various passwords PW1 and PW2 in addition to or instead of AFC and/or AFD. For example, the tags may contain an access password for preventing unauthorized access to some tag areas, and/or a kill password for turning the tag inactive. Especially the advanced functionality data may be tag dependent, e.g. tag specific information. The system may also comprise a number of computers and/or servers 570 and 572 for providing a service related to the advanced functionality. The system may also comprise one or more databases for holding data and results related to the advanced functionality. The various elements of the system may be in a communication connection with each other, e.g. through a data network, or peer-to-peer connections from one element to another. The communication connections may be wired or wireless, e.g. an IP-based connection over a fixed network, a wireless local area network or a mobile communication network.

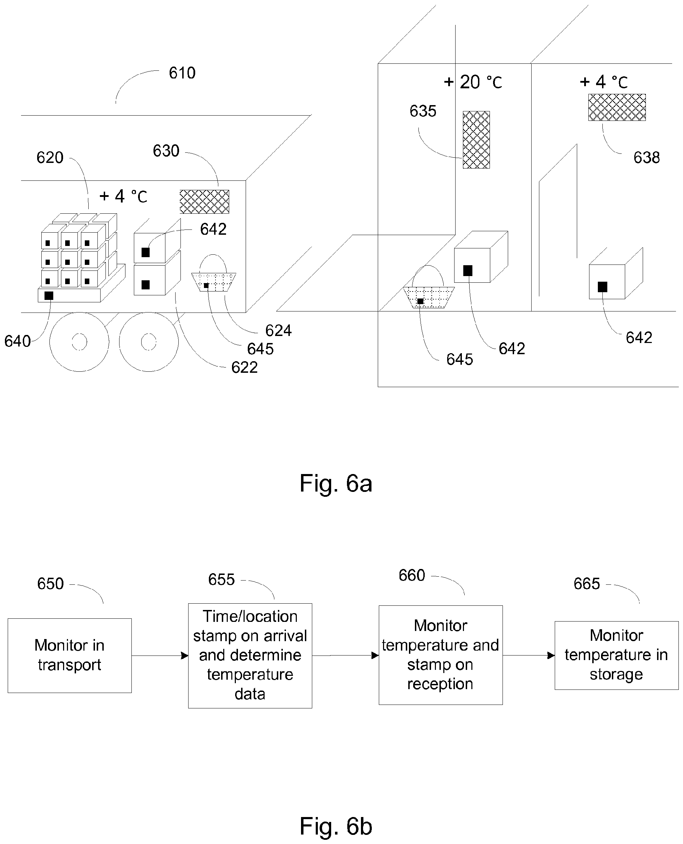

Figs. 6a and 6b show a diagram of exchanging temperature monitoring responsibility in a transportation chain, and a method for monitoring temperature in such an exchange. A vehicle 610 for transporting food items may be equipped with a reader device for determining temperature data from the remote access devices 640, 642 and 645 attached to the food items 620, 622 and 624. The temperature inside the vehicle may be uneven, and monitoring the temperature of each item instead of the whole container allows better determination of the temperature history of the items. Also, before the container is filled with food items, the container needs to be precooled, and remote-access devices (not shown) in various parts of the container may be used to determine the cooling of the container. This may be useful also during transport e.g. in addition to monitoring the food items. Different food items may need different cooling, and individual monitoring may allow precise and energy-efficient cooling of the items. The determined temperature monitoring data may be stored on the remote-access devices.

When the vehicle 610 is unloaded, the food items may be placed on a loading platform before they are moved into the cool storage. The loading platform may be such that there is no cooling, or that the cooling is inefficient, and the temperature may thus be higher. For one reason or another, food items may be left at the loading platform for a longer time, which may cause warming of the food items. Seamless monitoring of the items is now allowed, since there may be a reader 635 at the loading platform that is able to perform temperature readings of the remote access tags and store the temperature information in a network or back on the remote access devices 642 and 645. There may be an estimator unit in the vehicle 610 for estimating the desired handling of the items based on the temperature history. The upcoming temperature profile may also be predicted. For example, when the vehicle is soon arriving to a loading dock where the items may stay in an elevated temperature for a longer time, the vehicle may apply additional cooling to the items to prevent them from warming up excessively.

There may also be a signature arrangement that when a food item is unloaded, the receiver signs off the delivery and confirms that the receiver now has responsibility of the items. This change of responsibility, the time, location and the temperature information may be recorded with the help of the reader, and even stored onto the tags 642 and 645. This information may be made tamper-proof by the application of public-key cryptography and digests. For example, the information to be secured may be compressed into a digest which is a unidirectional projection from a data into a bit string. Such compression may be made e.g. by the MD5 algorithm. Generally, two pieces of data are highly unlikely to produce the same digest, which enables to ensure that the data has not been altered. The digest may be encrypted with a secret key in a public-key-infrastructure. This enables anyone to ensure the identity of the signer by decrypting the data using the corresponding public key. Both parties in an exchange of responsibility may sign the same data, whereby it becomes practically impossible to modify the data without the two signing parties agreeing to do so. To prevent even this from happening, the data may be signed or encrypted with the public key of an authority or another third party, whereby only the third party is able to verify the authenticity of the data. This all, combined with the arrangement where calibration data is not available to the signing parties, makes it very difficult to forge temperature monitoring data. The signatures, digests etc. products from signing and encryption may be stored on a server, or they may be stored in the memory of the tag being signed.

The vehicle reader 630 may also perform temperature monitoring to create a temperature log of the transport. Such monitoring allows better traceability of the items and their temperatures, as well as the responsible parties. For example, the reader identifiers may be stored with the temperature information so that it may be traced which reader has carried out the temperature reading. As shown, the items may continue to be monitored when they have been moved into the cool storage, since there may be a reader 638 for this purpose, as well. Rejection of food items is allowed if they have been spoiled in transport or in storage based on their temperature history. Since the tags are inexpensive, there may be a large number of tags, which improves redundancy and reliability of the system.

It may be necessary to move food items from a larger container to a smaller one before sale. In this case, it may happen that a remote access device attached with the item may be thrown away with the larger container and the smaller containers may receive their own tags. This would possibly invalidate the temperature history. Therefore, the temperature history stored in association with the earlier large container and the earlier tag may be copied onto the later tags of the smaller containers. The copying may happen in a server, from the memory of the earlier tag to the memory of the later tag, or merely by associating the earlier and later tags (e.g. storing the tag identifiers together).

Figs. 7a and 7b show a diagram of the concept of a transportation leg with a temperature profile of an item, and a method for controlling temperature and/or time of an item during, before and after a transportation lap The operation may allow to save energy due to no overcooling, and to ensure that the perishable items remain intact. It may also be possible to "run" a temperature profile for a specific item if the temperature monitoring information is specific to each item. Determination of the last valid selling date (or best before date), and the price may be done based on the temperature history.

At point 710, the item leaves the point of origin, to be transported to an intermediate destination using a vessel 720. The items may be such that they require a certain temperature to mature, or that they require a certain temperature for not to spoil. Therefore, the temperature of an item may be monitored and controlled using remote access devices, and a temperature profile 750 may be implemented en route to the destination. In this manner, the items may be at a targeted state of maturity or freshness at the end point of the transportation. The next transportation leg may take place by a cooling vehicle 730. The cooling vehicle may know its time to reach the destination 740 e.g. from a navigation device, and therefore may set the cooling temperature of the items based on the length of the journey. For example, a short journey may allow a higher temperature and a long journey to the destination may require a lower temperature. The vehicle 730 may also anticipate arrival to the destination and increase the temperature of the items to match a desired temperature for display for sales.

The determination of the condition of the items may take place using integration of temperature over time, or by using integration over time of a function dependent on temperature, or by summing temperature data etc. In this manner, each leg of the food chain can be optimized in terms of temperature, condition of the items and energy consumption. The operators of the vessel 720, the vehicle 730 and the destination warehouse 740 may control the temperature using the temperature data or the history data obtained by using energetically passive remote access tags.

In Fig. 7b, a method for controlling temperature is shown. In phase 760, temperature data is obtained and temperature is monitored. Using the temperature data, in phase 765, the usability and/or condition of the food items is determined. In phase 770, a usability/condition target for the items is determined, e.g. based on predicted transportation time. In phase 775, the temperature of the cooling system (and of the items) is controlled using the current condition of the items and the target condition of the items. The controlling may also be done so that it happens according to the average item, according to the warmest item, according to the item worst in condition etc. In other words, the items may be handled as a group in the control, although their temperature data is determined and stored individually.

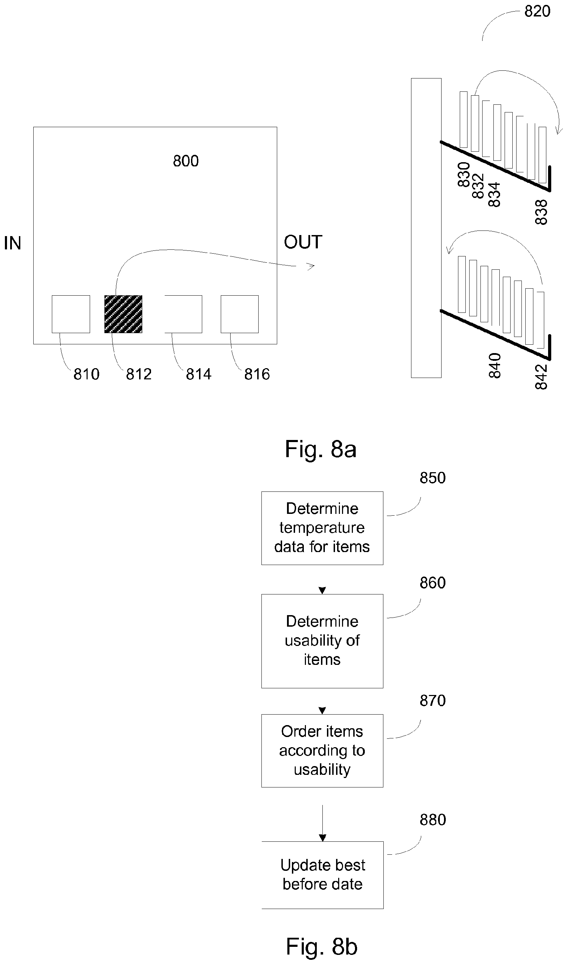

Figs. 8a and 8b show a diagram of controlling the location and/or temperature of an item e.g. in a warehouse, cooling container or a display shelf based on monitoring, and a method for the same. In a warehouse 800, the items may arrive in a certain order. For example, the item 816 may have arrived first, the item 814 before item 816, item 812 before item 814 and item 810 last. Based on the determination of the temperature data history, it may be decided that, although item 816 arrived first, item 812 needs to be shipped out first in order to ensure the usability and good condition of item 812 when it reaches the end customer. Similarly, on a shelf 820, a reader may indicate that among items 830, 832, 834, 838 on a shelf, item 832 may be in worst condition, and needs to be sold first in order to reduce food waste. The operator of the store may then move the item 832 to the front, or the moving may happen automatically. Likewise, an item 842 may be moved to the back on the shelf due to its good condition and long remaining sales time. The tags may also have a visual indicator of the status and identity of the food item they are attached to, to help the people managing the items to recognize them.

In Fig. 8b, a method for ordering items based on temperature monitoring using energetically essentially passive tags is shown. In phase 850, the temperature data for items is determined. In phase 860, from the determined temperature data (e.g. temperature history), the usability and condition of items is determined. In phase 870, based on the condition and/or usability, items may be ordered for sale or transportation. In phase 880, last sale date or best before date of the items may be adjusted based on the determined conditions. Furthermore, the price may be adjusted based on the condition.

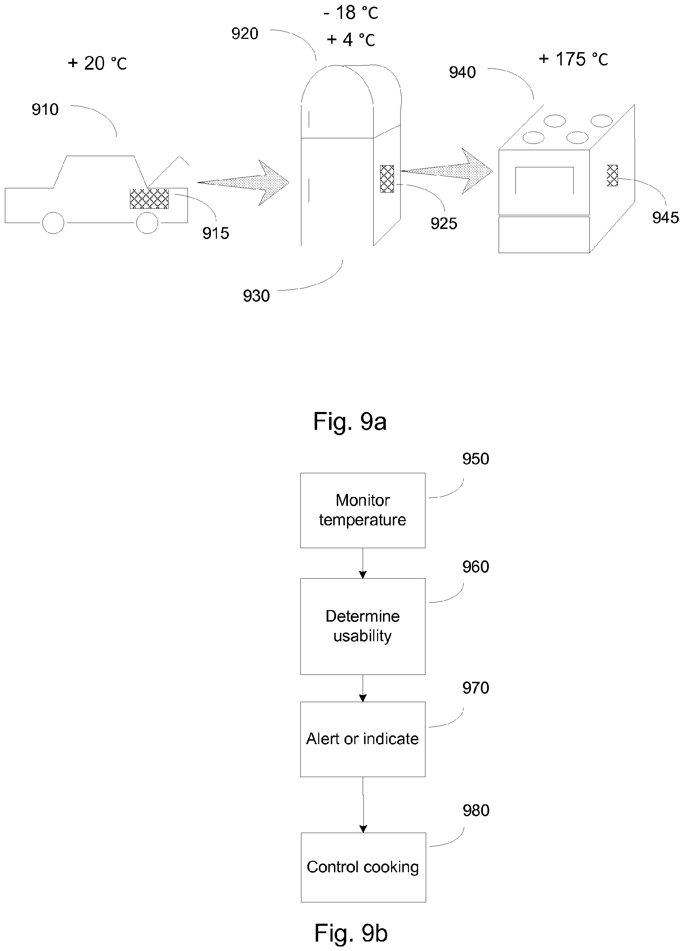

Figs. 9a and 9b show a diagram of storing and preparing food at the consumer and a method for the same. The consumer may bring the food item home in the trunk of a car 910, typically in a plastic bag without any insulating material. The car may be equipped with a reader functionality or may carry a separate reader device 915 for carrying out temperature monitoring of items bought from the grocery store. The plastic bags may also have remote access devices attached thereto. The reader 915 in the car may monitor the temperature of the food items, and it may store the temperature data, communicate the data to a network memory, or send the temperature data back to the remote access devices for storage. One way or another, the reader device 915 may arrange so that the temperature history is available to the appliances 920, 930 and 940 at home.

The freezer 920 at home may be connected to a reader 925. The reader may carry out a temperature measurement of the tagged food items, and it may also read temperature history data stored onto the tags. Based on the reading, the freezer may compute how much cooling power needs to be applied to properly freeze the items to be stored into the freezer. For example, the reader 925 may measure the current temperature of a meat item using the energetically passive tag, enquire the weight of the meat item from the tag (the weight may be stored onto the tag) or estimate the weight from the EPC code or by other means, and then compute the needed cooling power and time. The freezer may also read the temperature history, or may read a freezing indicator (threshold indicator) from the tag, and in case an item has already been frozen earlier, but is now thawed and not in a frozen state, may reject the item by giving an alarm to the consumer that re-freezing an item is not allowed.

The fridge 930 at home may also be connected to a reader 925, which may be the same or a separate reader from the reader connected to the freezer. The reader may measure the temperature of an item to be placed in the fridge, as well as its temperature history, and indicate to which compartment (to which temperature) the item should be placed. For example, items being at risk of spoiling may be stored in a colder temperature than other items. The fridge may also indicate that an item is unusable or poor quality, or may alert the consumer if he is trying to place a spoiled item in the fridge. The fridge and the freezer may have software and hardware for browsing the items stored therein, together with their temperature information (determined by the reader 925) as well as the items' temperature history.

The oven 940 or other food preparing appliance such as a grill or a microwave oven may have reader functionality or may carry a separate reader 945 connected thereto. The oven may thereby measure the temperature of an item to be prepared before and during the cooking to ensure proper end result and preparation of the food. The oven may also acquire the temperature history of an item (or its associated remote access device) and adjust cooking based on the temperature history.

The tags may therefore stay on the food items from the first creation (e.g. harvesting), throughout the chain, and until consumption of the food at the consumer's home. The tags may also have a visual indicator of the status and identity of the food item they are attached to, to help the people managing the items to recognize them. When the tags are finally removed, they may go to the waste bin, and a reader in the kitchen may access the tags and acquire their temperature history. This temperature history may be sent to a server, e.g. of the producer, of an authority, or any internet service, in order to gather data on different food items and their temperature history e.g. in a country or for a specific producer or seller. The tags in the waste bin may further be used to monitor temperature in a waste disposal facility such as a dump yard.

Fig. 9b shows a method for storing and preparing food at the consumer. In phase 950, temperature data is determined and the temperature is monitored. The temperature history of an item may also be determined. Using the data determined in phase 950, the usability and condition of an item may be determined in phase 960. This determination of the usability and condition of an item may be used to alert or guide the user e.g. to discard items or to place the items in storage properly in step 970. In phase 980, cooking may be controlled using the temperature data obtained in earlier phases.

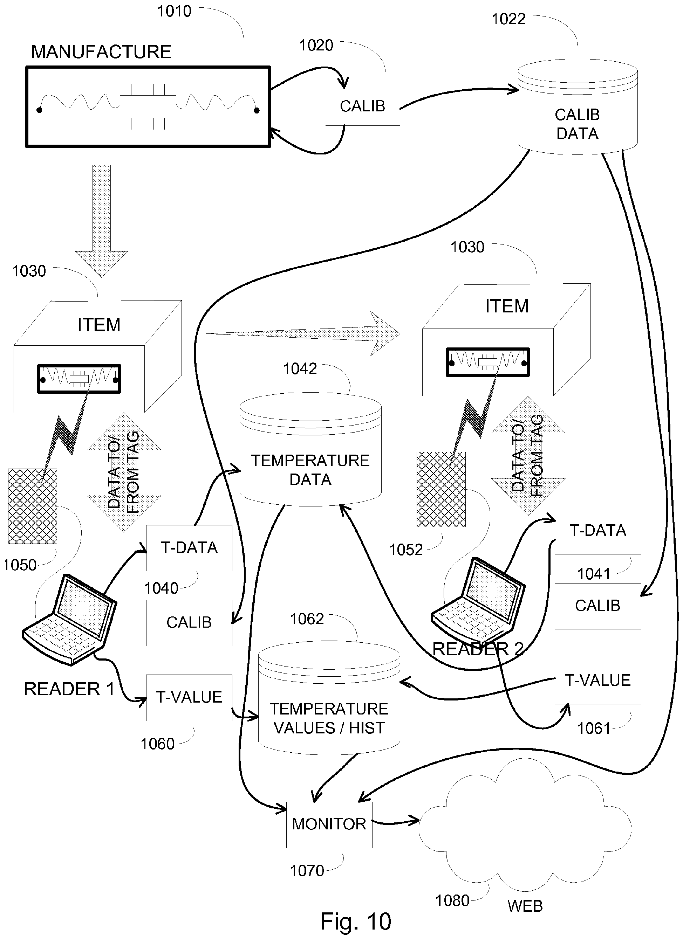

Fig. 10 shows a diagram for creating, storing, delivering and using information and data related to temperature monitoring. During the manufacturing phase 1010 the remote access devices or tags receive their identity, and they may be calibrated. The calibration information 1020 may be stored in the tag memory, or stored partially in the tag memory and in a calibration data server 1022. As an example not presented as an embodiment of the present invention, the calibration information may alternatively be stored to a calibration data server.

At a point 1030, the tag is physically associated with an item in order for the tag to follow the temperature of the item so that measuring the tag temperature yields an accurate reading on the item temperature. The tag's temperature data 1040 may be stored to a temperature data server 1042, or back to the tag memory, or both, or partially to the server and to the tag memory with the help of a first reader 1050. The reader may, with help of calibration information, form a temperature value 1060. The temperature value 1060 may be stored to a temperature value database 1062 and/or back to the tag. In the databases 1022, 1042 and 1062, the values may be stored together with a tag identifier so that they may be retrieved based on the tag identifier.

The item 1030 may be moved (or transported) to a different location, where there may be a second reader 1052. With the help of the second reader 1052, second temperature data 1041 may be determined. Using calibration data, second temperature value 1061 may be formed. The temperature data 1041 and the temperature value 1061 may be stored to the databases 1042 and 1062, respectively, or back to the tag memory.

There may be a monitoring system 1070 connected to the temperature measuring elements and other databases. The system 1070 may e.g. be a system operated by authorities monitoring a food chain, or it may be a system of a logistics company specializing in transporting temperature-sensitive goods. The system 1070 may be connected to the internet or another network 1080. The system may be able to access calibration information, while other elements in Fig. 10 may be prevented access to the calibration information (the calibration information may be stored on the tags). Such an arrangement may create a tamper-proof temperature monitoring system, where the reader devices may be used to determine temperature data, but the reader devices or other elements in the system are not able to compute the actual temperature values in lack of the calibration data. This way, the reader devices are not able to feed altered or false information into the system e.g. in a situation where temperature regulations are broken. The temperature data stored for the tags when they pass through the temperature managed chain may be interpreted afterwards and the actual temperature values may only be available to the monitoring system 1070.

For temperature measurements, calibration data may be stored in the password memory of a remote-access device. Calibration may be done with well known curve fitting algorithms. Typically calibration measurements are performed, and some curve, i.e. function, fitted to the calibration measurement data. For example, a number of pairs (*f'_{osc,i} ;T'ᵢ)* may be measured in the calibration measurements, where *f'_{osc,i}* is the value of the value of the measured quantity in *i*th measurement, and *T'ᵢ* is the reference value of the environment variable in *i*th measurement. It should be emphasized, that *T'ᵢ* is the value of the environment variable in the remote-access device, where the measured quantity is measured. For example, *T* may be the temperature of the remote-access device, which in a stationary state equals the ambient temperature. For calibration, a function *g* may be used to interpolate or extrapolate the relation between these values as *f_{osc}(T)*=*g(T)* and, since one generally wants this function to represent the calibration measurements, it is required that *g(T'i)≈f'_{osc,i}* for all *i.* The function *g(T)* may be a polynomial, or some other suitable function. Typically, a function with only a few parameters is used, such a first degree polynomial, and the parameters are estimated with well known curve fitting techniques. Explicit examples are the first and second degree polynomials: *g(T)*=*a₁T*+*a₀* or *g(T)*=*a₂T²*+*a₁T*+*a₀,* where the parameters a are estimated by curve fitting techniques and using the calibration measurement results. In some cases it may be feasible to use the inverse, i.e. use a function *h* such that *T(f_{osc})*=*h(f_{osc})* and *T'ᵢ≈h (f'_{osc,i})* for all *i.* The functional form of h can also be a low degree polynomial, e.g. *h(fosc)*=*b₁f_{osc}*+*b₀* or *h(f_{osc})*=*b₂f_{osc}²*+*b₁f_{osc}*+*b₀.* It is also possible, that all the measured values (*f'_{osc,i} ;Ti),* possibly arranged according to increasing *f'_{osc,i},* form a lookup table that is used as *h.* Furthermore, it is possible, that both the quantities and the environment variables are measured as function of another variable, such as time, i.e. both the pairs (*f'_{osc,i} ;t'ᵢ)* and (*t',ᵢ ;T'ᵢ)* are measured, and they are combined to form calibration information only when needed. It is also possible that the pairs (*f'_{osc,i} ;t'ᵢ)* and (*t'_{,i} ;T'ᵢ)* are measured with different devices and stored on different storage devices. It is also possible that all the data triplets (*f'_{osc,i} ;t'i ;T'ᵢ)* are used for calibration such that only a sufficient amount of most recent measurement values are used for calibration. This might be useful, if the dependence of the quantity on the environment value drifts in time. By these calibration measurements, and possibly using known curve-fitting algorithms, calibration data can be obtained. Calibration data means data that can be used to determine the value of the environmental variable *T* based on the measurement of a quantity *f_{osc}*. It is also noted, that by using higher than 1^{st} degree polynomials *g* or *h*, the value of the environment variable can be more accurately determined than with a 1^{st} degree polynomial. Moreover, it is noted, that in case higher degree polynomials are used, it is feasible to used the function *h* rather than *g*, since this allows for direct solution of the value of the environment variable. In case a higher degree g was used, one would have to solve the roots of the polynomial, and choose the correct one to determine the value.

Calibration can be done either incrementally or in a single run, and also only partial calibration data can be measured. In an incremental calibration, the reader device requests old calibration data and measures the value of the quantity using a remote-access apparatus. The old calibration data can be stored in the remote-access apparatus, the reader, a memory card or in a external server. The reader device then uses this information to generate new, possibly more accurate, calibration data. New data may comprise the measured value and the time or location of measurement, or the new data may comprise the measured value and the corresponding value of the environment variable. Furthermore the new data may comprise, when applicable, any or several of: the identity of the remote-access device, the time, the location, and the value of the environment variable. In order to be stored, the new calibration data is sent. It may be sent to the remote-access apparatus, to another remote-access apparatus, the memory of the reader device, a memory card, or an external server, or to many of the previous. Furthermore, different parts of the new data may be sent to different entities. The existing calibration information may be e.g. all the measured (*f'_{osc,i;}t'ᵢ;T'ᵢ)* triplets, and the new calibration information may be this with an added, most recent triplet. Some calibration data may also be removed. It is also possible to weigh the calibration measurements such that the recent calibration measurement results are give more weight than the older results. Thus, in the determination of the value of the environment variable, the most recent known values are given more weight than the older values. Moreover, it is possible to weight the calibration measurement results such that more weight is given to measurements that are done near the probable use conditions. E.g. more weight can be given to measurements near the room temperature than to measurements near the bonding temperature. Apart from calibration measurements, measurements may be formed using only the old calibrations data. In this case the new calibration data is not formed.

When a remote-access apparatus is used to measure the environment, the environment or the value of an environment variable may change as function of time. The variation of the environment temperature of a remote-access apparatus may be due to variable temperature in a fixed location, or due to transportation, where the remote-access apparatus may be exposed to different environments. In many applications, such as logistics, food chain, or construction, the user is often interested, whether the temperature (or the value of another environment variable) is within a predetermined usable range or not, or how often or how long has the remote-access apparatus been in a forbidden environment. Range information of this kind may also be stored in the password memory. One or more thresholds or ranges may be stored, and the current value of a measurable quantity dependent on temperature, or the temperature value itself, may be compared with the one or more thresholds to determine usability of an item. In other words, the temperature information itself may not be formed, but instead measuring the value of a local measurable variable such as an oscillator frequency, it may be determined that the value of the local measurable variable is in acceptable range, or has exceeded the range.

Some examples of such thresholds and ranges include: (1) a threshold for maximum allowed temperature. This type of threshold is typical in food logistics. The range can be e.g. a few degrees of Celsius for fresh food, or around minus 10 °C for frozen items. (2) a threshold for minimum allowed temperature. This type of threshold is typical also in food logistics, but also in many other liquid transportations. For example, products comprising a lot of water should not be frozen, and therefore a lower threshold of around 0 °C might be applicable. Such a threshold applies also to e.g. vegetables and some other fresh food. (3) a combination of an upper threshold and a lower threshold. For example, some fresh food items should be kept in between around 0 °C and 4 °C. The allowed environment would thus be between 0 °C and 4 °C. (4) another combination of an upper threshold and a lower threshold. For example, some items may be stored in a hot environment or a cold environment, but not in between these temperatures. As an example, some prepared food can be stored in a hot environment, where the temperature is above 60 °C, or in a cold environment, where the temperature is below 6 °C, but not in between these temperatures.

The threshold values may be applicable to a single remote-access device, or a group of remote-access devices. Threshold values can be determined for at least the following cases:
(1) a threshold value or threshold values for a single item based on a single measured value of a measurable quantity using a remote access apparatus,
(2) a threshold value or threshold values for a single item based on a multiple of measured values of a measurable quantity using a set of uncalibrated remote access apparatus, wherein a reference distribution is unknown,
(3) a threshold value or threshold values for a single item based on a multiple of measured values of a measurable quantity using a set of uncalibrated remote access apparatus, wherein reference distributions are known,
(4) a threshold value or threshold values for a single item based on a multiple of measured values of a measurable quantity using a set of uncalibrated remote access apparatus, and at least one value value of a measurable quantity using at least one calibrated remote access apparatus,
(5) a threshold value or threshold values for a set of items based on a multiple of measured values of a measurable quantity using a set of uncalibrated remote access apparatus, wherein reference distributions are known and
(6) a threshold value or threshold values for a set of items based on a multiple of measured values of a measurable quantity using a set of uncalibrated remote access apparatus, and at least one value value of a measurable quantity using at least one calibrated remote access apparatus.

In the first case, the usability of an item is determined by comparing a measured value with a threshold value. The threshold value may be e.g. a frequency of a local oscillator corresponding to a temperature. The local oscillator is a local oscillator of the remote-access apparatus in connection with the item. The threshold may be set e.g. using calibration data of the device, using calibration data of similar devices, or by setting the item to a known temperature and determining the value of the measurable quantity. Further, the threshold may be set on statistical basis. E.g. if a distribution *φ*|*T*=*Tᵢ* of the measurable quantity in a temperature Ti is known, a threshold may be set for example to *<φ*|*_{T}*=*_{T}i*>±*Nstd(φ*|*T*=*Ti),* where <*φ*|*T*=*Ti*> is the average of the reference distribution, N is an integer, and std(*φ*|*T*=*Ti*) is the deviation of the reference distribution. For example, the item has a usable temperature range of 4 - 8 °C, a lower threshold for the frequency may be found from the known distribution in 8 °C, and the lower threshold may equal to <*φ*|*T*=*8*>-*Nstd(φ*|*T*=*8).* Similarly, the upper threshold for the frequency may be taken as *<φ*|*T*=*4*>*-Nstd(φ*|*T*=*4).*

In the second case, a threshold may be set based on the distribution. The usability of an item is determined by comparing the usability of an item is determined by comparing a measured value with a threshold value. The threshold value may be e.g. a frequency of a local oscillator corresponding to a temperature. The local oscillator is a local oscillator of the remote-access apparatus in connection with the item. The threshold may be set for example to <*f*>±*Nstd(f)*, where <f> is the average of measured values, N is an integer, and std(f) is the deviation of the measured values.

In the third case, a threshold may be set based on known distributions. The usability of an item is determined by comparing the usability of an item is determined by comparing a measured value with a threshold value. The threshold value may be e.g. a frequency of a local oscillator corresponding to a temperature. The local oscillator is a local oscillator of the remote-access apparatus in connection with the item. By measuring the value, a their distribution *φ* becomes measured. By comparing the measured *φ* to the set of known distributions, *φ*|*T*=*Ti*, the corresponding temperature may be found. The threshold may be set for example to <*φ*|*T*=*Ti*>±*Nstd(φ*|*T*=*Ti)*, where <*φ*|*T*=*Ti*> is the average of the reference distribution, N is an integer, and std(*φ*|*T*=*Ti*) is the deviation of the reference distribution.

In the fourth case, at least one calibrated remote-access apparatus is used to measure the temperature. Therefore, one may select the correct reference distribution *φ*|*T*=*Ti* since the temperature Ti is measured. In contrast to case (3), no comparison between distributions may be needed.

In the fifth case, a set of items may be determined unusable based on the measured distribution. The distribution may be compared to reference distributions, and is too much deviation or skewness is noticed, all the items are determined unusable or "possibly unusable". In the latter case, the possibly unusable items may be sent for a more detailed examination.

In the sixth case, a set of items may be determined unusable based on the measured distribution. Furthermore, the temperature may be determined using one calibrated remote-access apparatus within the set of items. The measured distribution may be compared a reference distribution, and the reference distribution can be selected based on the measured temperature. If too much deviation or skewness is noticed, all the items are determined unusable or "possibly unusable". In the latter case, the possibly unusable items may be sent for a more detailed examination.

Usability information may also be formed and stored in the password memory. In forming usability information by comparing a state variable with said at least one threshold value, the reader device or another device may compare the state variable such as the measured frequency or the integrated process state to a threshold value. In case a soft threshold is used, the state variable may be updated before the comparison. For example, a calculated frequency value can be used as the state variable, or the calculated frequency value can be used to update the state variable. The calculated frequency may give penalty for the item's state in case measurements have not been done according to a measurement schedule. The comparison may be done by the reader device. Based on this comparison the reader device may generate usability information. The usability information is preferably written to the remote-access apparatus. The usability information can be stored also elsewhere, such as the reader device, a detachable memory card or an information server. Usability information may be one bit indicating that the item is either usable or not. Usability information may also comprise another bit of information indicating whether the item was determined non-satisfactory on the basis of a penalty scheme or on the basis of a measurement. Usability information may also comprise a third bit of information indicating whether a penalty scheme was applied to the item's state during the item's life or not. Moreover, usability information may comprise a fourth bit of information indicating whether the operator responsible for a fault is the one making the measurement or a previous operator.

In determining the usability of an item by using usability information, a device will determine the usability of an item based on usability information. The device may be an RFID reader device or another device, such as a computer. The usability information may be formed in the device or elsewhere. As an example, the state variable may be sent from a reader device the device to another device, and the another device may generate usability information by comparing the state variable with a threshold value. Here the state variable may mean the value of the measurable quantity or the state variable obtained by integration of a rate. In addition, an RFID reader may read the usability information from a remote access apparatus and send this information to the another device. The another device may then determine the usability based on this information. Usability information may also be stored on a reader device. Moreover, the threshold values or usability information be stored in one or some of the remote-access apparatus, another remote-access apparatus, the reader device, the another device, a memory card, or an external database.

Various arrangements described above, e.g. those in context of Figs. 6, 7 and 10, may make it possible to arrange determination of temperatures in an efficient, simple, and tamper-proof manner. For example, calibration may be performed so that access to calibration information is restricted, and thereby the party determining the raw temperature data may not accurately know the actual temperature values. In addition, calibration may be performed at time of manufacturing, during the use of the tags, or at a later time. The calibration data may be sold, that is, access to the calibration data may be restricted and billing information may be formed based on the access. Access to calibration data and/or temperature data may be granted to authorities, which may improve food safety when official inspections and monitoring are applied to food production and transport chains. Since access to the essential calibration information and/or temperature information is restricted, the monitoring and inspection may be made essentially tamper-proof. This may, in turn, prevent illegal activities and spoiled food from escaping the authorities.

According to the various embodiments described above, RFID tags may be used for food chain monitoring as follows. The tags may first be manufactured, wherein they gain the functionality of acting as passive RFID tags having a temperature determination ability. Then, the tags may undergo calibration such that each tag may be accurately used for determining the temperature of the tag and thereby following the temperature of the item to which the tag is attached. When the tags are used in the food chain, they are attached to the specific food items to be monitored. Naturally, the tags may still function normally in the logistic chain as having the product codes and other information stored onto the tag. The monitoring of temperature is done with the help of reader devices that have the means for communicating with the tag so that temperature data can be determined. The calibration information used for the temperature determination may be stored on the tag or in a database. The measured temperature values may be written back to the tag memory, or the temperature values may be written to a database. The described implementation allows for simple use of existing tag functionality with minimal changes to the tags and/or the reader devices.

What has been described above in the various embodiments regarding RFID tags is often implemented by a chip on the RFID tag. Therefore, one target is an RFID chip providing advanced functionality by RFID tags such that these chips may be used in a temperature managed chain.

In the above, an energetically essentially passive transponder or a remote-access apparatus or a tag (these being essentially interchangeable in meaning) may be understood to operate so that it draws its operating energy essentially from the reader's electromagnetic field. A reader device may be understood to be any device capable of making the tag operate and communicate according to an expected e.g. standardized process, e.g. by replying to a query with a back-scattering modulation of the reader field. In case of a temperature measurement, the measurement unit may be understood to essentially draw its energy from the reader field, and the determination of temperature data may happen using a temperature-dependent element such as an oscillator, a resistor, or another means for determining temperature data.

The present application has been filed together with the applications titled "Data storage on a remote-access apparatus", "A method for measuring environment using a calibration database", "A method for determining an environment dependent usability of an item", and "Temperature monitoring system", all on the same date, and by the same applicant. For the purposes of storing and using application data in a password, the application "Data storage on a remote-access apparatus" is referred to. For the purposes of forming and using calibration data related to temperature determination, the application "A method for measuring environment using a calibration database" is referred to. For the purposes of determining usability of an item, using thresholds and ranges for the same, and for statistical determination of usability, the application "A method for determining an environment dependent usability of an item" is referred to. For the purposes of determining temperature information in various systems, the application "Temperature monitoring system" is referred to.

The various embodiments can be implemented with the help of computer program code that resides in a memory and causes the relevant apparatuses to carry out the method. For example, a tag, a chip or a reader device may comprise circuitry and electronics for handling, receiving and transmitting data, computer program code in a memory, and a processor that, when running the computer program code, causes the reader device to carry out the features of an embodiment. Alternatively or in addition, a tag or a chip for a tag or a reader device may comprise logic circuitry for implementing the same functionality as may be carried out by means of program code run on a processor. Yet further, a network device may comprise circuitry and electronics for handling, receiving and transmitting data, computer program code in a memory, and a processor that, when running the computer program code, causes the network device to carry out the features of an embodiment. A system may comprise any number of tags of the same kind or different kinds, and reader devices and network computers in any combination.

## Claims

1. A method for monitoring temperature with a remote-access device (642), said remote-access device (642) being energetically passive, the method comprising:
- associating said remote-access device (642) physically with an item (622), such that a temperature of said item (622) is in a relation to a temperature of the remote-access device (642),
- determining first temperature data (1040) of said remote-access device using a reader device (630,1050) in a first environment (730), wherein it is not possible to determine an actual temperature value from the temperature data without calibration information,
- moving said remote-access device (642) from the first environment (730) to a second environment (740),
- determining second temperature data (1041) of said remote-access device using a reader device (635,1052) in said second environment,
- energizing said remote-access device (642) using at least one reader device (630, 635) in determining said first and second temperature data (1040,1041) using an electromagnetic field,
- communicating said first (1040) and second temperature data (1041) from the remote-access device (642) to said at least one reader device (630, 635) using back-scattering modulation of said electromagnetic field, and
- determining one or more actual temperature values (1060,1061) from the temperature data (1040,1041) by using calibration data (AFD,1020) received from the remote-access device (642),
**characterized in that** the calibration data (AFD,1020) is stored in a memory (122, 230) of the remote-access device (642) in encrypted form, wherein the method comprises calibrating said first temperature data (1040) using the calibration data (AFD,1020) using a computer different from said at least one reader device (630, 635) at a time later than the time of determining first temperature data (1040).

2. A method according to claim 1, further comprising:
- storing the actual temperature values (1060,1061) together with a tag identifier so as to allow retrieving the temperature values based on the tag identifier.

3. A method according to claim 1 or 2, comprising:
- determining said first temperature data (1040) of said remote-access device (642) using a first reader device (630),
- determining said second temperature data (1041) of said remote-access device (642) using a second reader device (635),
- associating an identifier of said first reader device (630) with said first temperature data (1040),
- associating an identifier of said second reader device (635) with said second temperature data (1041),
- storing said first temperature data, said identifier of said first reader device, said second temperature data, and said identifier of said second reader device in association with each other into a memory.

4. A method according to any of the claims 1 to 3, comprising:
- storing said first (1040) and second temperature data (1041) into a memory using a reader device, wherein said memory is memory on the remote-access device (642).

5. A method according to any of the claims 1 to 4, wherein the remote-access device (642) comprises calibration data (AFD,1020) for calibrating said temperature data (1040,1041), and the method comprises accessing said calibration data (AFD,1020).

6. A method according to any of the claims 1 to 5, wherein temperature data comprises at least one of the group of data indicative of temperature history, series of time and temperature data points, series of location and temperature data points, series of time, location and temperature data points or a value indicative of temperature data integrated over time.

7. A method according to any of the claims 1 to 6, comprising:
- comparing said temperature data to a threshold or a range, and
- based on said comparing, determining whether a threshold or a range has been exceeded, and
- indicating or storing information on exceeding a threshold or a range.

8. A method according to any of the claims 1 to 7, comprising:
- determining maturity, usability or quality of said item by using said temperature data,
- calculating a maturity, usability or quality time such as a best-before date based on said determining, and
- storing said maturity, usability or quality time on said remote-access device.

9. A method according to any of the claims 1 to 8, comprising:
- calibrating said remote-access device using a reader device before determining first and second temperature data, after determining first temperature data and before determining second temperature data, or after determining first and second temperature data.

10. A method according to any of the claims 1 to 9, comprising:
- copying temperature data from a first remote access device to a second remote access device.

11. A method according to any of the claims 1 to 10, comprising:
- storing information related to a change of responsibility of monitoring the item's temperature in association with said first and second temperature data, wherein said information related to a change of responsibility comprises in encrypted or unencrypted form at least one of a group of time, location, identifier of a responsible party, digest of temperature data and/or time, and a signature by a responsible party.

12. A system for monitoring temperature with a remote-access device, the system comprising:
- the remote access device (642),
- a first reader device (630) at a first location to determine first temperature data (1040) of said remote-access device in a first environment (730), wherein it is not possible to determine an actual temperature value from the temperature data without calibration information,
- a second reader device (635) at another location to determine second temperature data (1041) of said remote-access device in a second environment (740),
- a memory for storing said first temperature data (1040) and said second temperature data (1041),
wherein said remote-access device (642) comprises an antenna, circuitry for processing information, a memory, and a local oscillator for providing oscillator frequency data, wherein the frequency of the local oscillator depends on temperature, and wherein said remote-access device (642) is energetically passive,
**characterized in that** calibration data (AFD,1020) is stored in a memory (122, 230) of the remote-access device (642) in encrypted form, wherein the system comprises a computer different from said reader devices (630, 635) to calibrate said first temperature data using the calibration data (AFD,1020) at a time later than the time of determining first temperature data (1040).

13. A system according to claim 12, comprising:
- a temperature database for storing said first temperature data and said second temperature data in association with information indicative of the first reader device and the second reader device such as time information, location information or reader device identification.

## Patentansprüche

1. Ein Verfahren zum Überwachen der Temperatur mit einem Remote-Zugriffsgerät (642), wobei das Remote-Zugriffsgerät (642) energetisch passiv ist, wobei das Verfahren Folgendes umfasst:
- physisches Zuordnen des Remote-Zugriffsgeräts (642) zu einem Gegenstand (622), so dass eine Temperatur des Gegenstands (622) in Bezug zu einer Temperatur des Remote-Zugriffsgeräts (642) steht,
- Bestimmen von ersten Temperaturdaten (1040) des Remote-Zugriffsgeräts unter Verwendung einer Lesevorrichtung (630, 1050) in einer ersten Umgebung (730), wobei es nicht möglich ist, ohne Kalibrierungsinformationen aus den Temperaturdaten einen Temperatur-Istwert zu bestimmen,
- Bewegen des Remote-Zugriffsgeräts (642) aus der ersten Umgebung (730) in eine zweite Umgebung (740),
- Bestimmen von zweiten Temperaturdaten (1041) des Remote-Zugriffsgeräts unter Verwendung einer Lesevorrichtung (635, 1052) in der zweiten Umgebung,
- Versorgen des Remote-Zugriffsgeräts (642) mit Strom unter Verwendung mindestens einer Lesevorrichtung (630, 635) beim Bestimmen der ersten und zweiten Temperaturdaten (1040, 1041) unter Verwendung eines elektromagnetischen Feldes,
- Übertragen der ersten (1040) und zweiten Temperaturdaten (1041) von dem Remote-Zugriffsgerät (642) an die mindestens eine Lesevorrichtung (630, 635) unter Verwendung einer Rückstreumodulation des elektromagnetischen Feldes, und
- Bestimmen eines oder mehrerer Temperatur-Istwerte (1060, 1061) aus den Temperaturdaten (1040, 1041) unter Verwendung von aus dem Remote-Zugriffsgerät (642) empfangenen Kalibrierungsdaten (AFD, 1020),
**dadurch gekennzeichnet, dass** die Kalibrierungsdaten (AFD, 1020) in einem Speicher (122, 230) des Remote-Zugriffsgeräts (642) in verschlüsselter Form gespeichert sind, wobei das Verfahren das Kalibrieren der ersten Temperaturdaten (1040) unter Verwendung der Kalibrierungsdaten (AFD, 1020) unter Verwendung eines Computers, welcher sich von der mindestens einen Lesevorrichtung (630, 635) unterscheidet, zu einem späteren Zeitpunkt als dem Zeitpunkt des Bestimmens der ersten Temperaturdaten (1040) umfasst.

2. Verfahren gemäß Anspruch 1, ferner umfassend:
- Speichern der Temperatur-Istwerte (1060,1061) zusammen mit einer Tag-Kennung, um so das Abrufen der Temperaturwerte basierend auf der Tag-Kennung zu ermöglichen.

3. Verfahren gemäß Anspruch 1 oder 2, umfassend:
- Bestimmen der ersten Temperaturdaten (1040) des Remote-Zugriffsgeräts (642) unter Verwendung einer ersten Lesevorrichtung (630),
- Bestimmen der zweiten Temperaturdaten (1041) des Remote-Zugriffsgeräts (642) unter Verwendung einer zweiten Lesevorrichtung (635),
- Zuordnen einer Kennung der ersten Lesevorrichtung (630) zu den ersten Temperaturdaten (1040),
- Zuordnen einer Kennung der zweiten Lesevorrichtung (635) zu den zweiten Temperaturdaten (1041),
- Speichern der ersten Temperaturdaten, der Kennung der ersten Lesevorrichtung, der zweiten Temperaturdaten und der Kennung der zweiten Lesevorrichtung in Verbindung miteinander in einem Speicher.

4. Verfahren gemäß einem der Ansprüche 1 bis 3, umfassend:
- Speichern der ersten (1040) und zweiten Temperaturdaten (1041) in einem Speicher unter Verwendung einer Lesevorrichtung, wobei der Speicher ein Speicher auf dem Remote-Zugriffsgerät (642) ist.

5. Verfahren gemäß einem der Ansprüche 1 bis 4, wobei das Remote-Zugriffsgerät (642) Kalibrierungsdaten (AFD, 1020) zum Kalibrieren der Temperaturdaten (1040, 1041) aufweist und das Verfahren den Zugriff auf die Kalibrierungsdaten (AFD, 1020) umfasst.

6. Verfahren gemäß einem der Ansprüche 1 bis 5, wobei Temperaturdaten mindestens eines der Gruppe von Daten umfassen, die den Temperaturverlauf, die Reihenfolge von Zeit- und Temperaturdatenpunkten, die Reihenfolge von Orts- und Temperaturdatenpunkten, die Reihenfolge von Zeit-, Orts- und Temperaturdatenpunkten oder einen Wert anzeigen, der über die Zeit integrierte Temperaturdaten anzeigt.

7. Verfahren gemäß einem der Ansprüche 1 bis 6, umfassend:
- Vergleichen der Temperaturdaten mit einem Schwellenwert oder einem Bereich, und
- basierend auf diesem Vergleich, Bestimmen, ob ein Schwellenwert oder ein Bereich überschritten wurde, und
- Anzeigen oder Speichern von Informationen über das Überschreiten eines Schwellenwerts oder eines Bereichs.

8. Verfahren gemäß einem der Ansprüche 1 bis 7, umfassend:
- Bestimmen des Alters, der Gebrauchseignung oder der Qualität des Gegenstandes unter Verwendung der Temperaturdaten,
- Berechnen einer Zeit für das Alter, die Gebrauchseignung oder die Qualität wie bspw. ein Mindesthaltbarkeitsdatum, basierend auf dieser Bestimmung, und
- Speichern der Zeit für das Alter, die Gebrauchseignung oder die Qualität auf dem Remote-Zugriffsgerät.

9. Verfahren gemäß einem der Ansprüche 1 bis 8, umfassend:
- Kalibrieren des Remote-Zugriffsgeräts unter Verwendung einer Lesevorrichtung vor dem Bestimmen erster und zweiter Temperaturdaten, nach dem Bestimmen erster Temperaturdaten und vor dem Bestimmen zweiter Temperaturdaten oder nach dem Bestimmen erster und zweiter Temperaturdaten.

10. Verfahren gemäß einem der Ansprüche 1 bis 9, umfassend:
- Kopieren von Temperaturdaten von einem ersten Remote-Zugriffsgerät auf ein zweites Remote-Zugriffsgerät.

11. Verfahren gemäß einem der Ansprüche 1 bis 10, umfassend:
- Speichern von Informationen im Zusammenhang mit einer Änderung der Zuständigkeit für die Überwachung der Temperatur des Gegenstands in Verbindung mit den ersten und zweiten Temperaturdaten, wobei die Informationen im Zusammenhang mit einer Änderung der Zuständigkeit in verschlüsselter oder unverschlüsselter Form mindestens eines aus einer Gruppe von Zeit, Ort, Kennung einer zuständigen Partei, Zusammenfassung von Temperaturdaten und/oder Zeit und eine Unterschrift durch eine zuständige Partei umfassen.

12. System zum Überwachen der Temperatur mit einem Remote-Zugriffsgerät, wobei das System Folgendes aufweist:
- das Remote-Zugriffsgerät (642),
- eine erste Lesevorrichtung (630) an einem ersten Ort, um erste Temperaturdaten (1040) des Remote-Zugriffsgeräts in einer ersten Umgebung (730) zu bestimmen, wobei es nicht möglich ist, einen Temperatur-Istwert aus den Temperaturdaten ohne Kalibrierungsinformationen zu bestimmen,
- eine zweite Lesevorrichtung (635) an einem anderen Ort, um zweite Temperaturdaten (1041) des Remote-Zugriffsgeräts in einer zweiten Umgebung (740) zu bestimmen,
- einen Speicher zum Speichern der ersten Temperaturdaten (1040) und der zweiten Temperaturdaten (1041),
wobei das Remote-Zugriffsgerät (642) eine Antenne, eine Schaltung zum Verarbeiten von Informationen, einen Speicher und einen lokalen Oszillator zum Bereitstellen von Oszillatorfrequenzdaten umfasst, wobei die Frequenz des lokalen Oszillators von der Temperatur abhängt und wobei das Remote-Zugriffsgerät (642) energetisch passiv ist,
**dadurch gekennzeichnet, dass** Kalibrierungsdaten (AFD, 1020) in einem Speicher (122, 230) des Remote-Zugriffsgeräts (642) in verschlüsselter Form gespeichert sind, wobei das System einen Computer aufweist, der sich von den Lesevorrichtungen (630, 635) unterscheidet, um die ersten Temperaturdaten unter Verwendung der Kalibrierungsdaten (AFD, 1020) zu einem späteren Zeitpunkt als dem Zeitpunkt des Bestimmens der ersten Temperaturdaten (1040) zu kalibrieren.

13. System gemäß Anspruch 12, umfassend:
- eine Temperaturdatenbank zum Speichern der ersten Temperaturdaten und der zweiten Temperaturdaten in Verbindung mit Informationen, die die erste Lesevorrichtung und die zweite Lesevorrichtung wie bspw. Zeitinformationen, Ortsinformationen oder Lesevorrichtungs-Kennung anzeigen.

## Revendications

1. Procédé destiné à la surveillance d'une température avec un dispositif procurant un accès à distance (642), ledit dispositif procurant un accès à distance (642) étant passif du point de vue énergétique, le procédé comprenant le fait de :
- associer ledit dispositif procurant un accès à distance (642) par voie physique à un article (622), d'une manière telle qu'une température dudit article (622) est mise en relation avec une température du dispositif procurant un accès à distance (642) ;
- déterminer des premières données de températures (1040) dudit dispositif procurant un accès à distance en utilisant un dispositif faisant office de lecteur (630, 1050) dans un premier environnement (730), dans lequel il n'est pas possible de déterminer une valeur de température réelle à partir des données de températures en l'absence d'informations concernant l'étalonnage ;
- déplacer ledit dispositif procurant un accès à distance (642) depuis le premier environnement (730) jusqu'à un second environnement (740) ;
- déterminer des secondes données de températures (1041) dudit dispositif procurant un accès à distance en utilisant un dispositif faisant office de lecteur (635, 1052) dans ledit second environnement ;
- mettre sous tension ledit dispositif procurant un accès à distance (642) en utilisant au moins un dispositif faisant office de lecteur (630, 635) lors de la détermination desdites premières et desdites secondes données de températures (1040, 1041) en utilisant un champ électromagnétique ;
- communiquer lesdites premières données de températures (1040) et lesdites secondes données de températures (1041) à partir du dispositif procurant un accès à distance (642) audit au moins un dispositif faisant office de lecteur (630, 635) en utilisant une modulation par rétrodiffusion dudit champ électromagnétique ; et
- déterminer une ou plusieurs valeurs de températures réelles (1060, 1061) à partir des données de températures (1040, 1041) en utilisant des données d'étalonnage (AFD, 1020) reçues à partir du dispositif procurant un accès à distance (642) ;
**caractérisé en ce que** les données d'étalonnage (AFD, 1020) sont stockées dans une mémoire (122, 230) du dispositif procurant un accès à distance (642) sous une forme chiffrée ; dans lequel le procédé comprend le fait d'étalonner lesdites premières données de températures (1040) par l'intermédiaire des données d'étalonnage (AFD, 1020) en utilisant un ordinateur différent dudit au moins un dispositif faisant office de lecteur (630, 635) à un moment ultérieur au moment correspondant à la détermination des premières données de températures (1040).

2. Procédé selon la revendication 1, comprenant en outre le fait de :
- stocker les valeurs de températures réelles (1060, 1061) de manière conjointe avec un dispositif d'identification d'étiquette de façon à permettre l'extraction des valeurs de températures en se basant sur le dispositif d'identification d'étiquette.

3. Procédé selon la revendication 1 ou 2, comprenant le fait de :
- déterminer lesdites premières données de températures (1040) dudit dispositif procurant un accès à distance (642) en utilisant un premier dispositif faisant office de lecteur (630) ;
- déterminer lesdites secondes données de températures (1041) dudit dispositif procurant un accès à distance (642) en utilisant un second dispositif faisant office de lecteur (635) ;
- associer un dispositif d'identification dudit premier dispositif faisant office de lecteur (630) auxdites premières données de températures (1040) ;
- associer un dispositif d'identification dudit second dispositif faisant office de lecteur (635) auxdites secondes données de températures (1041) ;
- stocker lesdites premières données de températures, ledit dispositif d'identification dudit premier dispositif faisant office de lecteur, lesdites secondes données de températures et ledit dispositif d'identification dudit second dispositif faisant office de lecteur en association les uns avec les autres dans une mémoire.

4. Procédé selon l'une quelconque des revendications 1 à 3, comprenant le fait de :
- stocker lesdites premières données (1040) et lesdites secondes données de températures (1041) dans une mémoire en utilisant un dispositif faisant office de lecteur ; dans lequel ladite mémoire est une mémoire sur le dispositif procurant un accès à distance (642).

5. Procédé selon l'une quelconque des revendications 1 à 4, dans lequel le dispositif procurant un accès à distance (642) comprend des données d'étalonnage (AFD, 1020) destinées à l'étalonnage desdites données de températures (1040, 1041) et le procédé comprend le fait d'avoir accès auxdites données d'étalonnage (AFD, 1020).

6. Procédé selon l'une quelconque des revendications 1 à 5, dans lequel les données de températures comprennent au moins des données choisies parmi le groupe de données qui témoignent de l'historique des températures, des séries de données ponctuelles de dates et de températures, des séries de données ponctuelles de lieux et de températures, des séries de données ponctuelles de temps, de lieux et de températures ou une valeur qui témoigne des données de températures intégrées au cours du temps.

7. Procédé selon l'une quelconque des revendications 1 à 6, comprenant le fait de :
- comparer lesdites données de températures à un seuil ou à une plage ; et
- en se basant sur ladite comparaison, déterminer le fait de savoir si un seuil ou une plage a été dépassé ; et
- indiquer ou stocker des informations concernant le dépassement d'un seuil ou d'une plage.

8. Procédé selon l'une quelconque des revendications 1 à 7, comprenant le fait de :
- déterminer une maturité, une utilisabilité ou une qualité dudit article en utilisant lesdites données de température ;
- calculer une date de maturité, d'utilisabilité ou de qualité, comme par exemple une date limite d'utilisation optimale en se basant sur ladite détermination ; et
- stocker ladite date de maturité, d'utilisabilité ou de qualité sur ledit dispositif procurant un accès à distance.

9. Procédé selon l'une quelconque des revendications 1 à 8, comprenant le fait de :
- étalonner ledit dispositif procurant un accès à distance en utilisant un dispositif faisant office de lecteur avant la détermination des premières et des secondes données de températures, après la détermination des premières données de températures et avant la détermination des secondes données de températures ou après la détermination des premières et des secondes données de températures.

10. Procédé selon l'une quelconque des revendications 1 à 9, comprenant le fait de :
- copier des données de températures à partir d'un premier dispositif procurant un accès à distance sur un second dispositif procurant un accès à distance.

11. Procédé selon l'une quelconque des revendications 1 à 10, comprenant le fait de :
- stocker des informations concernant un changement de responsabilité de surveillance de la température d'un article en association avec lesdites premières et lesdites secondes données de températures ; dans lequel lesdites informations concernant un changement de responsabilité comprennent, sous une forme chiffrée ou non chiffrée, au moins un type d'informations concernant une date, un lieu, un dispositif d'identification d'une partie responsable, un récapitulatif de données de températures et/ou de dates, et une signature par une partie responsable.

12. Système destiné à surveiller une température avec un dispositif procurant un accès à distance, le système comprenant :
- le dispositif procurant un accès à distance (642) ;
- un premier dispositif faisant office de lecteur (630) à un premier endroit afin de déterminer des premières données de températures (1040) dudit dispositif procurant un accès à distance dans un premier environnement (730) dans lequel il n'est pas possible de déterminer une valeur de température réelle à partir des données de températures en l'absence d'informations d'étalonnage ;
- un second dispositif faisant office de lecteur (635) à un autre endroit afin de déterminer des secondes données de températures (1041) dudit dispositif procurant un accès à distance dans un second environnement (740) ;
- une mémoire destinée à stocker lesdites premières données de températures (1040) et lesdites secondes données de températures (1041) ;
- dans lequel ledit dispositif procurant un accès à distance (642) comprend une antenne, un ensemble de circuits destiné au traitement des informations, une mémoire et un oscillateur local destiné à fournir des données de fréquence d'oscillateur ; dans lequel la fréquence de l'oscillateur local dépend de la température ; et dans lequel ledit dispositif procurant un accès à distance (642) est passif du point de vue énergétique ;
**caractérisé en ce que** des données d'étalonnage (AFD, 1020) sont stockées dans une mémoire (122, 230) du dispositif procurant un accès à distance (642) sous une forme chiffrée ; dans lequel le système comprend un ordinateur différent desdits dispositifs faisant office de lecteurs (630, 635) dans le but d'étalonner lesdites premières données de températures en utilisant les données d'étalonnage (AFD, 1020) à un moment ultérieur par rapport au moment correspondant à la détermination des premières données de températures (1040).

13. Système selon la revendication 12, comprenant :
- une base de données de températures destinée à stocker lesdites premières données de températures et lesdites secondes données de températures en association avec des informations fournissant des indications qui concernent le premier dispositif faisant office de lecteur et le second dispositif faisant office de lecteur, telles que des informations liées à des dates, des informations concernant un lieu ou une identification du dispositif faisant office de lecteur.
